(19) Europäisches Patentamt

European Patent Office

Office européen des brevets

(11) EP 1 193 462 A2

(12) EUROPEAN PATENT APPLICATION

(43) Date of publication:
03.04.2002 Bulletin 2002/14

(51) Int Cl.⁷: $F28F\ 27/02$, $F28D\ 9/00$

(21) Application number: 01123454.9

(22) Date of filing: 28.09.2001

| | |
|---|---|
| (84) Designated Contracting States:<br>AT BE CH CY DE DK ES FI FR GB GR IE IT LI LU MC NL PT SE TR<br>Designated Extension States:<br>AL LT LV MK RO SI<br><br>(30) Priority: 29.09.2000 JP 2000301155<br>26.01.2001 JP 2001018734<br><br>(71) Applicant: **Calsonic Kansei Corporation**<br>**Tokyo (JP)**<br><br>(72) Inventors:<br>• **Maeda, Koji, c/oCalsonic Kansei Corporation**<br>**Tokyo (JP)** | • **Meguriya, Yuichi,**<br>**c/oCalsonic Kansei Corporation**<br>**Tokyo (JP)**<br>• **Kameda, Hidenobu,**<br>**c/oCalsonic Kansei Corporation**<br>**Tokyo (JP)**<br>• **Takenaka, Hitoshi,**<br>**c/oCalsonic Kansei Corporation**<br>**Tokyo (JP)**<br>• **Yoshida, Hiroyuki,**<br>**c/oCalsonic Kansei Corporation**<br>**Tokyo (JP)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Heat exchanger**

(57)     Combustion gas channels through which combustion gas (A) flowing in from a combustion gas inlet (17) passes are formed in first and second heat exchanger bodies (23) and (19) so as to be directed toward a combustion gas outlet (21) respectively. Liquid fuel (B) in which methanol and water have been mixed is supplied into a gap (51) between a distribution plate (47) and an upper plate (49) through fuel supply holes (57). The liquid fuel (B) is distributed and supplied to the whole of the first heat exchanger body (23) through a large number of holes in the distribution plate (47). In the first and second heat exchanger bodies (23) and (19), fuel channels (23a) and (19a) through which the liquid fuel (B) passes are formed so as to be directed vertically and separated from the combustion gas channels by partition plates, respectively. The liquid fuel (B) passing through the fuel channels (23a) and (19a) carries out heat exchange with the combustion gas. Thus, the liquid fuel (B) is vaporized. Chamfers are formed in the lower surfaces of the large number of holes of the distribution plate (47) so that the liquid fuel (B) flowing down through the holes is collected in the chamfer portions, and falls down in the form of drops. Thus, flows of the liquid fuel flowing out from adjacent ones of the holes are prevented from joining each other.

FIG.1

EP 1 193 462 A2

## Description

BACKGROUND OF THE INVENTION

1. Field of the Invention

The present invention relates to a heat exchanger. In the heat exchanger, a high-temperature heating medium passes from above heating medium channels, and liquid fuel is supplied to fuel channels adjacent to the heating medium channels through partition walls respectively, so that the liquid fuel is vaporized by heat exchange with the high-temperature heating medium.

2. Description of the Related Art

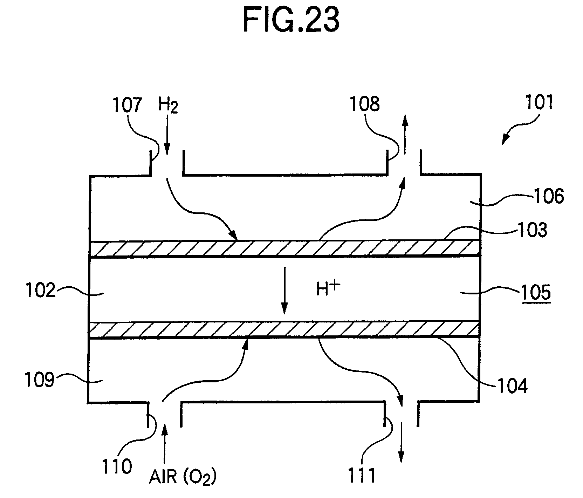

The related art of the present invention will be described with reference to Figs. 23-27. However, please note that these figures are prepared based on internal information of Calsonic Kansei Corporation that the Inventors belong to. Accordingly, these figures do not always constitute prior art of the invention.

For example, the fuel battery heat exchanger for a fuel battery is used to evaporate a liquid mixture of methanol ($CH_3OH$) and water ($H_2O$) and further superheat the evaporated mixture to a predetermined temperature in order to obtain hydrogen gas ($H_2$).

The power generation principle of the fuel battery will be described briefly with reference to Fig. 23. Fig. 23 shows only one cell 101 which forms a unit of the fuel battery. An intermediate portion of the cell 101 is partitioned by a membrane 105. The membrane 105 is formed by sandwiching an electrolyte 102 of phosphoric acid or the like between a hydrogen electrode 103 and an air electrode (oxygen electrode) 104. The membrane 105 has the property of permeating only hydrogen ions ($H^+$). In addition, hydrogen gas ($H_2$) is fed into a first reaction chamber 106 on the hydrogen electrode 103 side through a hydrogen supply port 107, while gas including unreacted hydrogen gas is allowed to be exhausted from a hydrogen reflux port 108. On the other hand, the air containing oxygen gas ($O_2$) is fed into a second reaction chamber 109 on the air electrode 104 side through an oxygen supply port 110, while the air is allowed to be exhausted from an exhaust port 111.

When power generation is to be performed, hydrogen gas is supplied into the first reaction chamber 106 through the hydrogen supply port 107 while the air containing oxygen gas is supplied into the second reaction chamber 109 through the oxygen supply port 110. As a result, the following reaction is produced in a portion of the hydrogen electrode 103 which faces the first reaction chamber 106.

$$H_2 \rightarrow 2H^+ + 2e^-$$

Hydrogen ions generated thus permeate the membrane 105 and enter the second reaction chamber 109. Then, the following reaction is produced in a portion of the air electrode 104 which faces the second reaction chamber 109.

$$2H^+ + O_2/2 + 2e^- \rightarrow H_2O$$

As a result, a difference in potential is produced between the hydrogen electrode 103 and the air electrode 104. Since the difference in potential is only about 1 V per cell 101, a required number of cells 101 shown in Fig. 23 are stacked and connected in series to thereby form a fuel battery stack (not shown). Thus, a required voltage is acquired. In addition, since a current obtained by this fuel battery stack is a direct current, the current is inverted alternately by an inverter when an alternate current is required.

To make the cell 101 generate electric power on the above-mentioned principle, it is necessary to feed hydrogen gas into the first reaction chamber 106. This hydrogen gas is taken out directly from a tank of a hydrogen absorbing alloy or the like, or produced by reforming fuel such as methanol ($CH_3OH$) or the like other than hydrogen gas. For example, when hydrogen gas is produced by use of methanol as fuel, required hydrogen gas can be obtained by the following reaction in the reformer.

$$CH_3OH + H_2O \rightarrow CO_2 + 3H_2$$

Hydrogen used in the fuel battery is made from methanol. In a fuel battery system in the related art, methanol required for hydrogen is supplied as vapor to a reforming reactor for reforming methanol, and water required for a reforming reaction is also supplied as vapor to the reforming reactor.

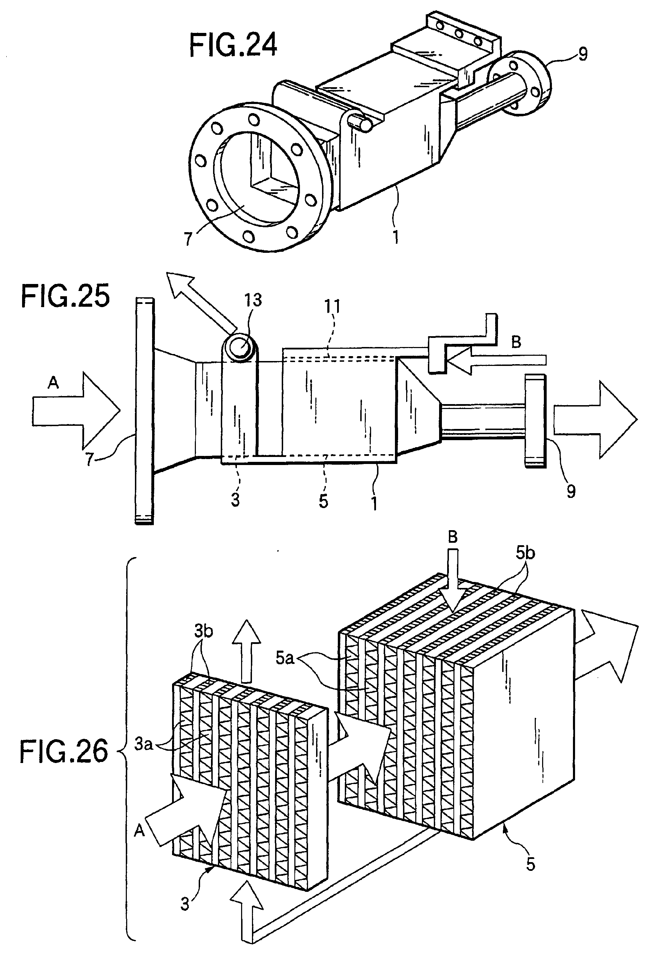

Figs. 24 and 25 are a perspective view and a side view showing a heat exchanger which functions as a first heat exchanger for evaporating the above-mentioned liquid fuel in which methanol and water are mixed. A first heat exchanger body 5 and a second heat exchanger body 3 are received in a body 1 of this heat exchanger. A combustion gas inlet 7 through which high-temperature combustion gas A is introduced is formed on the upstream side of the second heat exchanger body 3. On the other hand, a combustion gas outlet 9 through which the combustion gas after heat exchange is discharged is formed on the downstream side of the first heat exchanger body 5.

The first and second heat exchanger bodies 5 and 3 have combustion gas channels 5a and 3a respectively, as shown in Fig. 26. The combustion gas channels 5a and 3a through which the combustion gas A passes are extended horizontally. In addition, the first and second heat exchanger bodies 5 and 3 have fuel channels 5b and 3b, respectively. The fuel channels 5b and 3b are separated from the combustion gas channels 5a and 3a by partition plates, and are extended vertically. Liquid fuel B in which methanol and water have been mixed passes through the fuel channels 5b and 3b.

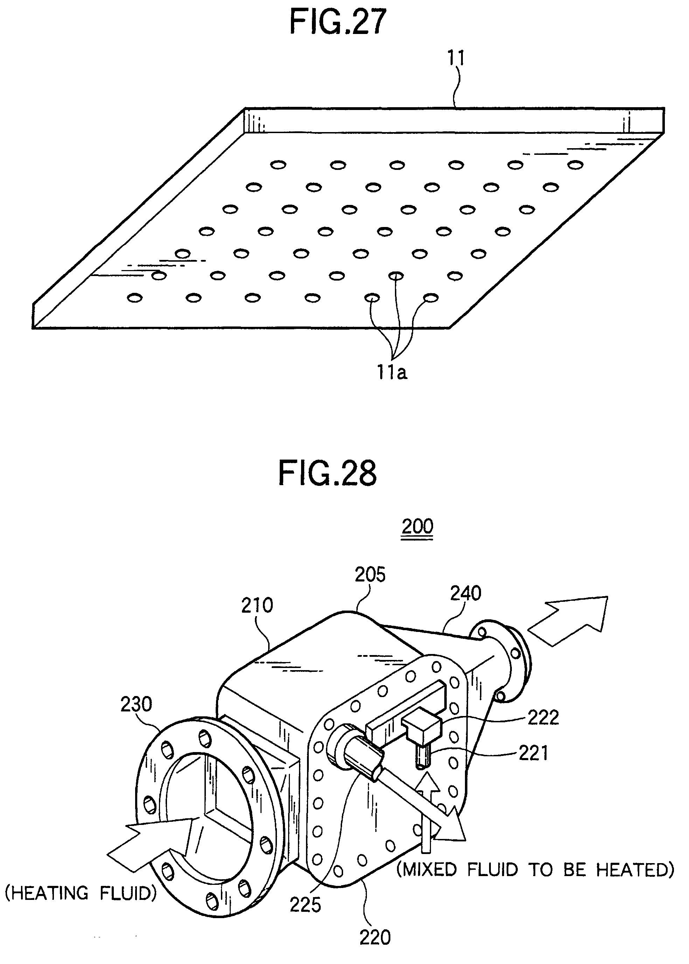

In addition, above the first heat exchanger body 5, a distribution plate 11 for supplying fuel as shown in Fig. 27 is installed so that a gap through which the liquid fuel B is supplied is formed all over the upper area of the distribution plate 11. A large number of holes 11a are provided in the distribution plate 11 so as to penetrate the distribution plate 11 vertically. The liquid fuel B is supplied into the above-mentioned gap in the direction shown in Fig. 25. As a result, the liquid fuel B falls down toward the first heat exchanger body 5 through the large number of holes 11a as shown in Fig. 27. Further, the liquid fuel B passes through a lower channel of the body 1, and flows upward into the second heat exchanger body 3. Thus, heat exchange is carried out between the liquid fuel B and the high-temperature combustion gas A so that the liquid fuel B is turned to vapor. The vapor which is a mixed gas of methanol and water flows out from a fuel outlet 13 so as to be supplied to a not-shown reforming reactor.

When the liquid fuel B is supplied to the first heat exchanger body 5, the liquid fuel B spreads all over the first heat exchanger body 5 because the large number of holes 11a are provided in the distributionplate 11. By narrowing the distance between every adjacent two of the large number of holes 11a to a certain extent, in other words, by forming a larger number of holes 11a, the liquid fuel B can be supplied to the whole area of the first heat exchanger body 5 more uniformly.

However, if the distance between every adjacent two of the large number of holes 11a is too narrow, flows of the liquid fuel B through adjacent ones of the holes 11a join each other in the lower surface of the distribution plate 11. As a result, a large amount of the liquid fuel B falls down to a certain portion so that the liquid fuel B cannot be supplied uniformly to the whole area of the first heat exchanger body 5. Thus, there is a problem that the heat exchanger cannot exert its function satisfactorily.

When the first heat exchanger 5 and the second heat exchanger 3 provided separately from each other are provided in the fuel battery so as to evaporate and superheat the mixed liquid of methanol and water to a predetermined temperature as described above, not only does the circuit of the fuel battery become complicated, but the number of parts of the fuel battery also increases. Thus, the fuel battery as a whole increases in cost and in size. In addition, because the first heat exchanger 5 and the second heat exchanger 3 are provided separately from each other for the purpose of circulating high-temperature gas through the first heat exchanger 5 and the second heat exchanger 3 separately, if the first heat exchanger 5 and the second heat exchanger 3 are bonded integrally without devising any special bonding method, it is difficult to keep the bonded state excellent for a long time. In addition, in the case where at least parts of constituent members of the first heat exchanger 5 and the second heat exchanger 3 are joined to each other by brazing, if the first heat exchanger 5 and the second heat exchanger 3 are joined integrally by welding such as Tig welding or the like, heat of the welding may result in secondary melting in the brazed portion between the first heat exchanger 5 and the second heat exchanger 3. If such secondary melting occurs, the yield of products deteriorates, of course, to thereby cause increase in cost.

SUMMARY OF THE INVENTION

It is therefore an object of the present invention to supply liquid fuel more uniformly to the whole area of a heat exchanger body.

It is another object of the present invention to provide a compact and inexpensive structure in which fluid to be heated such as mixed liquid of methanol and water can be evaporated by heating fluid such as heating gas, and further superheated to a predetermined temperature.

According to the present invention, there is provided a heat exchanger comprising:

a heating medium channel for passing a high-temperature heating medium;
a fuel channel provided adjacent to the heating medium channel and separated from the heating medium channels through a partition wall, the fuel channels being supplied with liquid fuel from above the heating medium channels to vaporize the liquid fuel by heat exchange with the high-temperature heating medium; and
a fuel supplyplate provided above the heat medium channels, the fuel supply plate having a plurality of holes for passing the liquid fuel,

wherein a circumferential edge of a fuel-outflow-side opening portion of each of the plurality of holes is chamfered.

According to the present invention, there is provided a heat exchanger comprising:

a heating medium channel for passing a high-temperature heating medium;
a fuel channel provided adjacent to the heating medium channel and separated from the heating medium channel through a partition wall, the fuel channels being supplied with liquid fuel from above the heating medium channel to vaporize the liquid fuel by heat exchange with the high-temperature heating medium; and
a fuel supply plate provided above the heat medium channels, the fuel supply plate having a plurality of holes for passing the liquid fuel,

wherein a spot-face is formed in a circumferential edge of a fuel-outflow-side opening portion of each of the plurality of holes.

According to the present invention, there is provided a heat exchanger comprising:

a heating medium channels for passing a high-temperature heating medium;
a fuel channel provided adjacent to the heating medium channel and separated from the heating medium channels through a partition wall respectively, the fuel channel being supplied with liquid fuel from above the heating medium channel to vaporize the liquid fuel by heat exchange with the high-temperature heating medium; and
a fuel supply plate provided above the heat medium channel, the fuel supply plate having a plurality of holes for passing the liquid fuel,

wherein a protrusion is provided on a fuel outflow side from the plurality of holes of the fuel supply plate to partition the plurality of holes.

According to the present invention, the protrusion may be integrated with the fuel supply plate.

According to the present invention, the protrusion may be constituted by a lattice member provided separately from the fuel supply plate.

According to the present invention, there is provided a heat exchanger comprising:

a heating medium channel for passing a high-temperature heating medium;
a fuel channel provided adjacent to the heating medium channel and separated from the heating medium channels through a partition wall, the fuel channels being supplied with liquid fuel from above the heating medium channel to vaporize the liquid fuel by heat exchange with the high-temperature heating medium; and
a fuel supply plate provided above the heat medium channel, the fuel supply plate having a plurality of holes for passing the liquid fuel,

wherein a groove is provided on a fuel outflow side from the plurality of holes of the fuel supply plate to partition the plurality of holes.

According to the present invention, the liquid fuel may be a mixed fuel of methanol and water for producing hydrogen required for a fuel battery, and the mixed fuel vaporized is supplied to a reforming reactor for reforming methanol to produce hydrogen.

According to the present invention, there is provided a fuel battery heat exchanger comprising:

a plurality of first tube sheets each defining therein a first channel and a second channel for passing a first fluid to be heated in directions reverse to each other, and an intermediate channel for connecting end portions of the first passage and the second passage with each other; and
a plurality of second tube sheets disposed between the adjacent first tube sheets, the second tube sheets each defining therein a third channel for passing a second fluid for heating the first fluid,

wherein the second fluid passes through the third channel in a direction perpendicular to a direction of passing the first fluid through the first channel and the second channel.

According to the present invention, each of the second tube sheets has an outer fin for forming the third channel.

According to the present invention, each of the second tube sheets may include a first metal plate and a second metal plate; and

the outer fin may be sandwiched between the first metal plate and the second metal plate.

According to the present invention, the first fluid may flow from the first channel to the second channel through the intermediate channel; and

the second fluid may flow in a direction from the second channel to the first channel.

According to the present invention, each of the first tube sheets may include:

a third metal plate defining the first channel, the second channel and the intermediate channel; and
a pair of partition plates sandwiching a third metal plate.

According to the present invention, the third metal plate may define the first channel, the second channel and the intermediate channel to be folded back by 180 degrees in a longitudinal end portion of the third metal plate.

According to the present invention, each of the partition plates may define a first through hole and a second through hole, and a third through hole;

the first metal plate may define a fourth through hole and a fifth through hole provided to match the first and second through holes of each of the partition plates; and
the second metal plate may define a six through hole provided to match the third through hole of each of the partition plates.

According to the present invention, an inner space of the fourth hole of each of the first metal plate may communicate with an inner space of the first through holes to form an inlet tank portion for introducing the first fluid into the first channel of each of the first tube sheet.

According to the present invention, an inner space of the fifth through hole of each of the first metal plates may communicate with an inner space of the second through hole of each of the partition plates to form an outlet tank portion for collecting the first fluid flowing from the second channel of each of the first tube sheet.

According to the present invention, an inner space of the sixth through hole of each of the second metal plate may communicate with an inner space of the third through hole of each of the partition plates to form the intermediate tank including the plurality of intermediate channels of the heat transfer element.

According to the present invention, each of the first tube sheets may include an inner fin in the third metal plate.

According to the invention, a fuel supply plate having a large number of holes through which liquid fuel passes for carrying out heat exchange between the liquid fuel and a heating medium flowing in heating medium channels is provided above the heating medium channels in a heat exchanger. In addition, chamfers are provided respectively in the circumferential edges of the fuel-outflow-side opening portions of the large number of holes. Accordingly, even if the distance between adjacent ones of the holes is narrowed, the liquid fuel flowing out through the holes is once kept in the chamfer portions of the respective holes, and thereafter falls down in the form of drops. Thus, the flows of the liquid fuel flowing through adjacent ones of the holes can be prevented from joining each other. As a result, it is possible to supply the liquid fuel to the whole area of the heat exchanger more uniformly.

According to the invention, a fuel supply plate having a large number of holes through which liquid fuel passes for carrying out heat exchange between the liquid fuel and a heating medium flowing in heating medium channels is provided above the heating medium channels in a heat exchanger. In addition, spot-faces are provided respectively in the circumferential edges of the fuel-outflow-side opening portions of the large number of holes. Accordingly, even if the distance between adjacent ones of the holes is narrowed, the liquid fuel flowing out through the holes is once kept in the spot-face portions of the respective holes, and thereafter falls down in the form of drops. Thus, the flows of the liquid fuel flowing through adjacent ones of the holes can be prevented from joining each other. As a result, it is possible to supply the liquid fuel to the whole area of the heat exchanger more uniformly.

According to the invention, a fuel supply plate having a large number of holes through which liquid fuel passes for carrying out heat exchange between the liquid fuel and a heating medium flowing in heating medium channels is provided above the heating medium channels in a heat exchanger. In addition, protrusions for partitioning the large number of holes are provided on the fuel outflow side from the large number of holes of the fuel supply plate. Accordingly, even if the distance between adjacent ones of the holes is narrowed, the liquid fuel flowing out through the holes is blocked by the protrusions. Thus, the flows of the liquid fuel flowing out through adjacent ones of the holes can be prevented from joining each other. As a result, it is possible to supply the liquid fuel to the whole area of the heat exchanger more uniformly.

According to the invention, the protrusions are integrated with the fuel supply plate. Thus, when the protrusions are to be provided, it is not necessary to add new parts, and it is possible to prevent the number of parts from increasing.

According to the invention, the protrusions are constituted by a lattice member provided separately from the fuel supply plate. Thus, working for forming the protrusions in the fuel supply plate can be omitted so that the working becomes easy.

According to the invention, a fuel supply plate having a large number of holes through which liquid fuel passes for carrying out heat exchange between the liquid fuel and a heating medium flowing in heating medium channels is provided above the heating medium channels in a heat exchanger. In addition, grooves for partitioning the large number of holes are provided on the fuel outflow side from the large number of holes of the fuel supply plate. Accordingly, even if the distance between adjacent ones of the holes is narrowed, the liquid fuel flowing out through the holes is blocked by the grooves. Thus, the flows of the liquid fuel flowing out through adjacent ones of the holes can be prevented from joining each other. As a result, it is possible to supply the liquid fuel to the whole area of the heat exchanger more uniformly.

According to the invention, the liquid fuel is a mixed fuel of methanol and water for producing hydrogen required for a fuel battery. Thus, it is possible to vaporize the mixed fuel surely, so that hydrogen to be supplied to the fuel battery can be produced surely in a reforming reactor.

In addition, the present invention configured thus can provide a compact and inexpensive structure in which fluid (first fluid) to be heated such as mixed liquid of methanol and water can be evaporated by heating fluid (second fluid) such as heating gas and further superheated to a predetermined temperature. That is, according to the present invention, heat exchange is carried out between the liquid fluid to be heated and the heating fluid while the heating fluid is flowing in the respective heating channels and the fluid to be heated is flowing through the respective upstream heated channels. Thus, the liquid fluid to be heated is heated and evaporated. Then, heat exchange is further carried out between the evaporated fluid to be heated and the heating fluid while the fluid to be heated is flowing through the respective downstream heated channels. Thus, the fluid to be heated is superheated to a predetermined temperature. In addition, according to the present invention, intermediate heated channels for connecting the end portions of the upstream and downstream heated channels with each other so as to make the fluid to be heated flow in directions reverse to each other can be constituted by parts of the plurality of heat transfer pipe elements. Thus, a first heat exchanger and a second heat exchanger provided separately from each other do not have to be joined to each other, so that the number of parts in the fuel battery as a whole can be reduced. As a result, the cost can bereduced, and the fuel battery can be miniaturized. Inaddition, even if at least parts of constituent members are bonded with each other by brazing, it is possible to surely prevent secondary dissolution from being produced in brazed portions due to the heat of welding.

Further, according to the fuel battery heat exchanger, heat exchange can be carried out between comparatively high-temperature heating fluid and comparatively high-temperature fluid to be heated, and between comparatively low-temperature heating fluid and comparatively low-temperature fluid to be superheated, respectively. Thus, the evaporated fluid to be heated can be superheated to a predetermined temperature more easily. In addition, the difference in temperature between the opposite sides of constituent members provided for partitioning the respective heating channels from the upstream and downstream heated channels can be reduced so that thermal stress produced in these constituent members can be reduced. Thus, the durability of the fuel battery heat exchanger according to the present invention can be ensured satisfactorily.

Further, according to the fuel battery heat exchanger, the degree of freedom in the position where an end portion of a pipe arrangement for feeding the fluid to be heated into the core portion is connected to an end portion of a pipe arrangement for taking out the fluid to be heated from the core portion can be improved. Thus, the space where the fuel battery heat exchanger according to the present invention is disposed can be utilized effectively.

BRIEF DESCRIPTION OF DRAWINGS

Fig. 1 is a sectional view in a fuel channel portion of a heat exchanger showing an embodiment of the present invention.

Fig. 2 is a sectional view in a combustion gas channel portion of the heat exchanger in Fig. 1.

Fig. 3 is a plan sectional view showing parts of fuel channels shown in Fig. 1.

Fig. 4 is a view showing parts of combustion gas channels shown in Fig. 2 when viewed in the left/right direction.

Fig. 5 is an exploded perspective view of a fuel supply unit in the heat exchanger in Fig. 1.

Fig. 6A is a bottom view showing a part of a distribution plate in the fuel supply unit in Fig. 5, and Fig. 6B is a sectional view taken on line C-C in Fig. 6A.

Figs. 7A and 7B show a modification of Figs. 6A and 6B, Fig. 7A being a bottom view showing a part of the distribution plate, Fig. 7B being a sectional view taken on line D-D in Fig. 7A.

Figs. 8A and 8B show an example in which recess portions are formed around holes in the lower surface of the distribution plate, Fig. 8A being a bottom view showing a part of the distribution plate, Fig. 8B being a sectional view taken on line E-E in Fig. 8A.

Figs. 9A and 9B show an example in which grooves like a lattice are formed around holes in the lower surface of the distribution plate, Fig. 9A being a bottom view showing a part of the distribution plate, Fig. 9B being a sectional view taken on line F-F in Fig. 9A.

Figs. 10A and 10B show an example in which a lattice member is fixed to the lower surface of the distribution plate, Fig. 10A being a bottom view showing a part of the distribution plate, Fig. 10B being a sectional view taken on line G-G in Fig. 10A.

Figs. 11A and 11B show an example in which another lattice member is fixed to the lower surface of the distribution plate, Fig. 11A being a bottom view showing a part of the distribution plate, Fig. 11B being a sectional view taken on line H-H in Fig. 11A.

Fig. 12 is a partially abbreviated diagram showing an embodiment of the present invention,

Fig. 13 is a bottom view of Fig. 1.

Fig. 14 is a partially exploded perspective view of a fuel battery heat exchanger according to the present invention.

Fig. 15 is a view of a third metal plate provided with assembling support portions in transversely opposite ends.

Fig. 16 is a partially enlarged view of inner fins.

Fig. 17 is a view of a partition plate provided with assembling support portions in transversely opposite ends.

Fig. 18 is a view showing a combination element.

Fig. 19 is a partially enlarged view of outer fins.

Fig. 20 is a view showing one of a pair of side plates.

Fig. 21 is a view showing the other side plate likewise.

Fig. 22 is a view of an embodiment of the present invention immediately after brazing.

Fig. 23 is a substantially sectional view of a cell for use in explaining the power generation principle of a fuel battery.

Fig. 24 is a perspective view showing the whole of a heat exchanger in the related art.

Fig. 25 is a side view of the heat exchanger in Fig. 24.

Fig. 26 is an explanatory view showing the flows of fuel and combustion gas in the heat exchanger in Fig. 24.

Fig. 27 is a perspective view of a distribution plate in the heat exchanger in Fig. 24.

Fig. 28 is a view showing a third embodiment of the present invention.

Fig. 29 is a view showing a plurality of sheet tubes.

Fig. 30A and 30B are view showing structure of each sheet tube.

Fig. 31 is a sectional view showing the sheet tube.

Fig. 32 is a view showing an inner fin applied in the third embodiment.

## DETAILED DESCRIPTION OF THE PRESENT INVENTION

The present invention will be described with reference to the accompanying drawings.

First Embodiment

A first embodiment of the present invention will be described below with reference to the drawings.

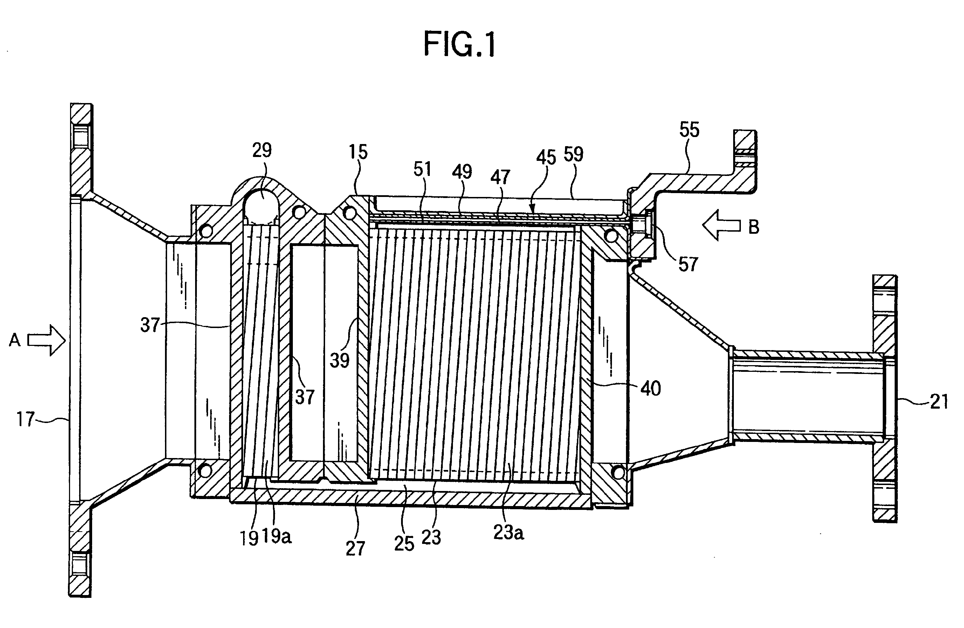

Fig. 1 is a sectional view of a heat exchanger showing the first embodiment of the present invention. This heat exchanger has a basic configuration similar to that of the heat exchanger in the related art shown in Fig. 24, except that the distribution plate shown in Fig. 27 is different from that used in the heat exchanger in the related art.

That is, in the above-mentioned heat exchanger, a second heat exchanger body 19 is received on a combustion gas inlet 17 side in a body 15, and a first heat exchanger body 23 is received on a combustion gas outlet 21 side in the body 15. A fuel communication channel 25 is provided in the lower portion of the body 15 so that lower end portions of fuel channels 23a in a first heat exchanger body 23 communicate with lower end portions of fuel channels 19a in a second heat exchanger body 19. The fuel communication channel 25 is formed by a lower opening portion of the body 15 closed with a lower plate 27.

A fuel outlet 29 communicates with upper end portions of the fuel channels 19a. This fuel outlet 29 communicates with a not-shown reforming reactor to which vapor of methanol and vapor of water are introduced to thereby produce hydrogen.

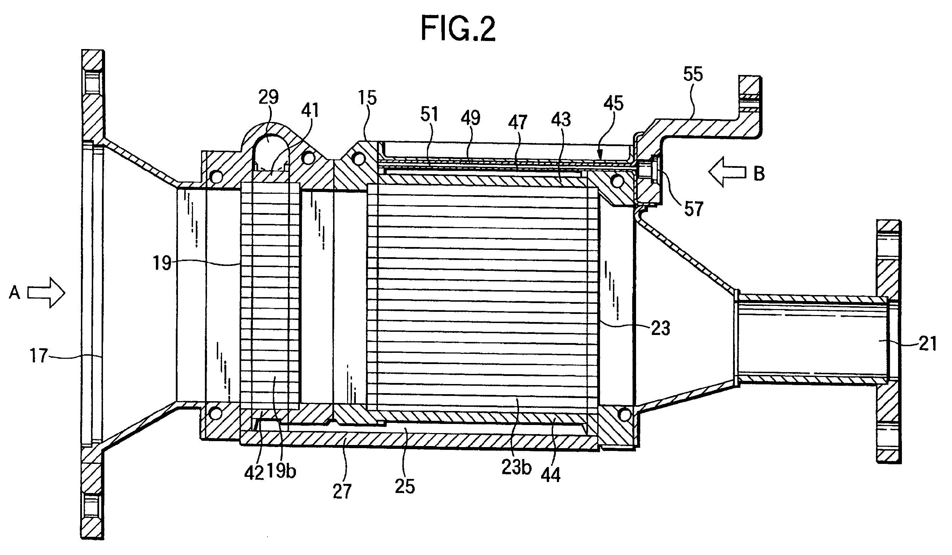

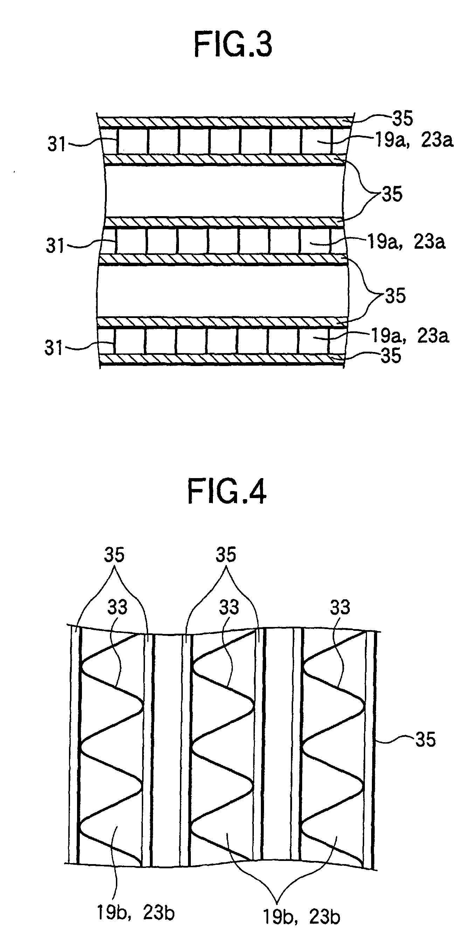

While Fig. 1 shows a sectional view of the portion of the fuel channels 19a and 23a, Fig. 2 shows a sectional view of the portion of combustion gas channels 19b and 23b as heating medium channels through which combustion gas as a high-temperature heating medium passes. Fig. 3 is a plan sectional view showing parts of the fuel channels 19a and 23a shown in Fig. 1, that is, Fig. 3 is a plan view showing a view viewed vertically sectioned in Fig. 1. Fig. 4 is a view in which parts of the combustion gas channels 19b and 23b shown in Fig. 2 are viewed in the left/right direction.

A plurality of plate-like fins 31 are disposed in each of the fuel channels 19a and 23a as shown in Fig.

3 so as to extend vertically in Fig. 1. On the other hand, fins 33 corrugated as shown in Fig. 4 are disposed in each of the combustion gas channels 19b and 23b. Then, among the fins 31 and 33, partition plates 35 are provided as partition walls for partitioning the fuel channels 19a and 23a and the combustion gas channels 19b and 23b.

In addition, as shown in Fig. 1, sealing members 37 and 38 in the opposite, left and right ends of the fuel channels 19a prevent the combustion gas A from flowing into the fuel channels 19a. On the other hand, sealing members 39 and 40 in the opposite, left and right ends of the fuel channels 23a prevent the combustion gas A from flowing into the fuel channels 23a. Further, as shown in Fig. 2, sealing members 41 and 42 in the opposite, upper and lower ends of the combustion gas channels 19b prevent the liquid fuel B from flowing into the combustion gas channels 19b. On the other hand, sealing members 43 and 44 in the opposite, upper and lower ends of the combustion gas channels 23b prevent the liquid fuel B from flowing into the combustion gas channels 23b.

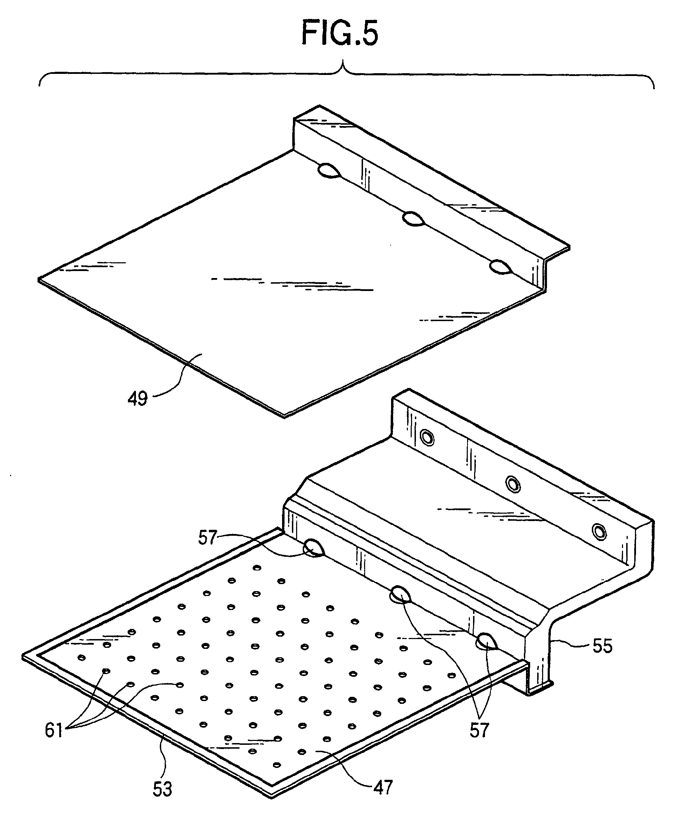

A fuel supply unit 45 is provided in the upper opening portion of the body 15 corresponding to the upper portion of the first heat exchanger body 23. In the fuel supply unit 45, a gap 51 through which fuel is supplied is formed between a distribution plate 47 which acts as a fuel supply plate and an upper plate 49 which is disposed above the distribution plate 47. The distribution plate 47 and the upper plate 49 are put on top of each other, as shown in the perspective view of Fig. 5. A belt-like gap formation member 53 is attached to three circumferential sides of the upper plate 49 side surface of the distribution plate 47. The upper plate 49 is put on the gap formation member 53. Thus, the gap 51 is formed.

The end portion of the distribution plate 47 in which the gap formation member 53 is not provided is bent into a downcurved L-shape. A fuel supply bracket 55 is fixed to this bent portion. Fuel supply holes 57 communicating with the gap 51 are formed in the fuel supply bracket 55. The liquid fuel B in which methanol and water have been mixed is supplied into the fuel supply holes 57. In addition, a cover 59 is further attached onto the upper plate 49.

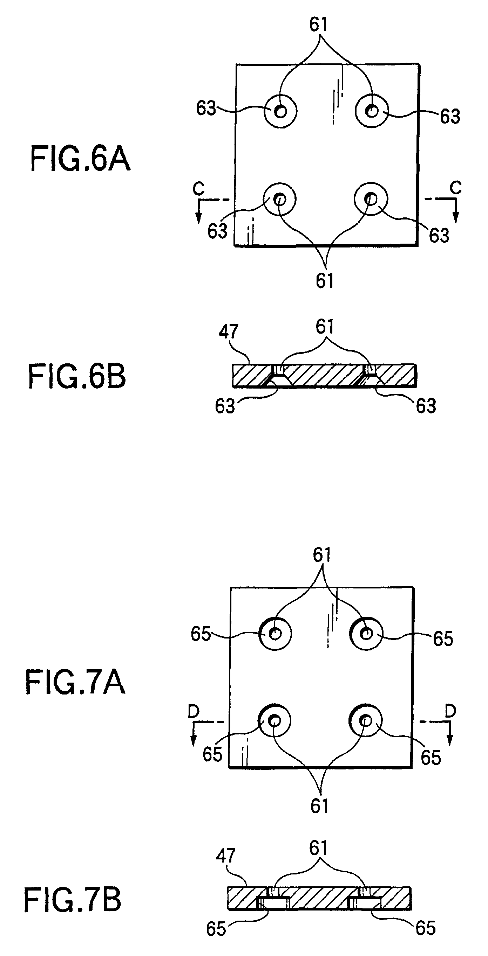

A large number of holes 61 through which the liquid fuel B passes are formed in the distribution plate 47 substantially correspondingly to the whole upper surface of the first heat exchanger body 23. Fig. 6A is a bottom view showing a part of the distribution plate 47, and Fig. 6B is a sectional view taken on line C-C in Fig. 6A. Chamfers 63 are formed in the large number of holes 61 in the lower surface facing the first heat exchanger body 23. When the distribution plate 47 is made of stainless steel to be 1 mm thick, the size of each of the holes 61 i.s $\phi$ 0.5, and the size of each of the chamfers 63 is C0.7. Such a chamfer 63 is formed in every hole 61. Incidentally, the angle of the chamfer 63 is not limited to 45 degrees.

In the heat exchanger configured thus, the combustion gas A flowing through the combustion gas inlet 17 passes through the combustion gas channels 19b of the second heat exchanger body 19 and the combustion gas channels 23b of the first heat exchanger body 23 sequentially, and flows out to the outside through the combustion gas outlet 21. On the other hand, the liquid fuel B in which methanol and water have been mixed is supplied to the gap 51 between the distribution plate 47 and the upper plate 49 through the fuel supply holes 57, and spreads substantially all over the gap 51. After that, the liquid fuel B passes through the large number of holes 61 and falls down into the fuel channels 23a of the first heat exchanger body 23. Then, heat exchange between the liquid fuel B and the combustion gas A is carried out at the fuel channels 23a and the fuel gas channels 23b so that the liquid fuel B is vaporized while being partially remained unvaporized. Further, the fuel passes through the fuel communication channel 25 and rises in the fuel channels 19a of the second heat exchanger body 19. Then, heat exchange between the liquid fuel B and the combustion gas A is carried out again at the fuel channels 19a and the fuel gas channel 19b. Thus, the liquid fuel B vaporized entirely flows to the outside of the heat exchanger through the fuel outlet 29, so as to be supplied to a not-shown reforming reactor.

When the liquid fuel B falls down into the first heat exchanger body 23 through the large number of holes 61, flows of the liquid fuel B are once collected in the outlet portions of the holes 61 by the surface tension of the liquid fuel B because the chamfers 63 are formed in the outlet portions of the holes 61. Then, the liquid fuel B falls down in the form of drops. Thus, even if the holes 61 are disposed so that adjacent ones are close to each other to a certain extent, the drops of the liquid fuel B flowing out through the adjacent holes 61 are prevented from joining each other. As a result, the liquid fuel B can be supplied to the whole area of the first heat exchanger body 23 more uniformly, so that the heat exchanger can exert its function satisfactorily.

Figs. 7A and 7B show a variation of the first embodiment in which spot-face 65 is formed in the lower surface of every hole 61. Fig. 7A is a bottom view showing a part of the distribution plate 47, and Fig. 7B is a sectional view taken on line D-D in Fig. 7A. By provision of the spot-faces 65, the liquid fuel B is collected in the portions of the spot-faces 65 in the same manner as that in Figs. 6A and 6B. Then, the liquid fuel B falls down in the form of drops. Thus, an effect similar to that in Figs. 6A and 6B can be obtained.

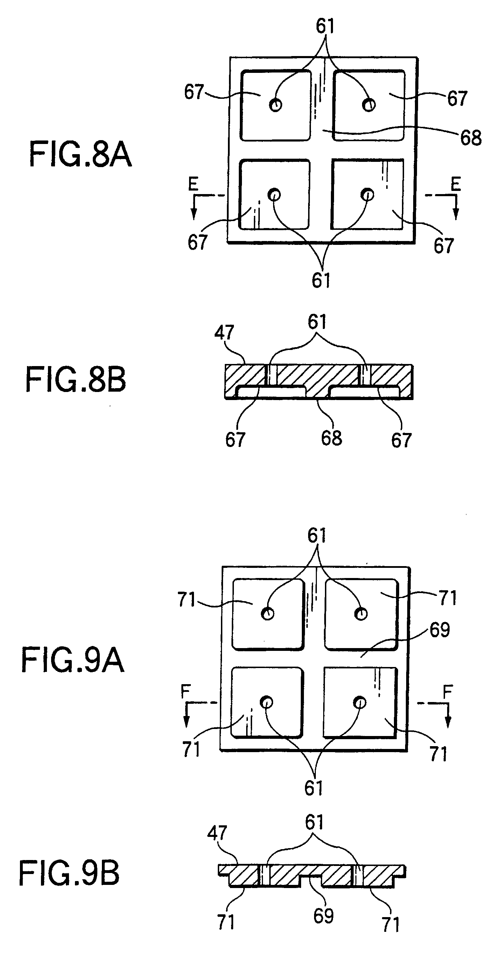

Figs. 8A and 8B show another variation of the first embodiment in which square recess portions 67 are formed around the holes 61 respectively. Fig. 8A is a bottom view showing a part of the distribution plate 47, and Fig. 8B is a sectional view taken on line E-E in Fig. 8A. The recess portions 67 are formed around the holes 61 so that protrusions 68 are formed like a lattice so as to partition the holes 61. In this case, the liquid fuel B flowing out through the holes 61 is collected in the recess portions 67, and blocked by the protrusions 68. Then, the flows of the liquid fuel B flowing out through adjacent ones of the holes 61 are prevented from joining each other. Thus, an effect similar to that in the embodiment in Figs. 6A and 6B can be obtained.

Figs. 9A and 9B show still another variation of the first embodiment in which grooves 69 like a lattice are formed around the holes 61 respectively so as to partition adjacent ones of the holes 61. Fig. 9A is a bottom view showing a part of the distribution plate 47, and Fig. 9B is a sectional view taken on line F-F in Fig. 9A. The grooves 69 are formed like a lattice so that square protrusion portions 71 are formed in portions surrounded by the lattice grooves,69. In this case, flows of the liquid fuel B flowing out through adjacent ones of the holes 61 into the lower surface of the distribution plate 47 are blocked by the grooves 69 so as to be prevented from joining each other. Then, the liquid fuel B collected on the protrusion portions 71 around the holes 61 falls down in the form of drops. Thus, an effect similar to that in Figs. 6A and 6B can be obtained.

In the embodiments of Figs. 6A and 6B, Figs. 7A and 7B, Figs. 8A and 8B and Figs. 9A and 9B, it will go well if mechanical working such as the chamfers 63 or the like is given to the distribution plate 47. No other new parts are required, and the number of parts is prevented from increasing.

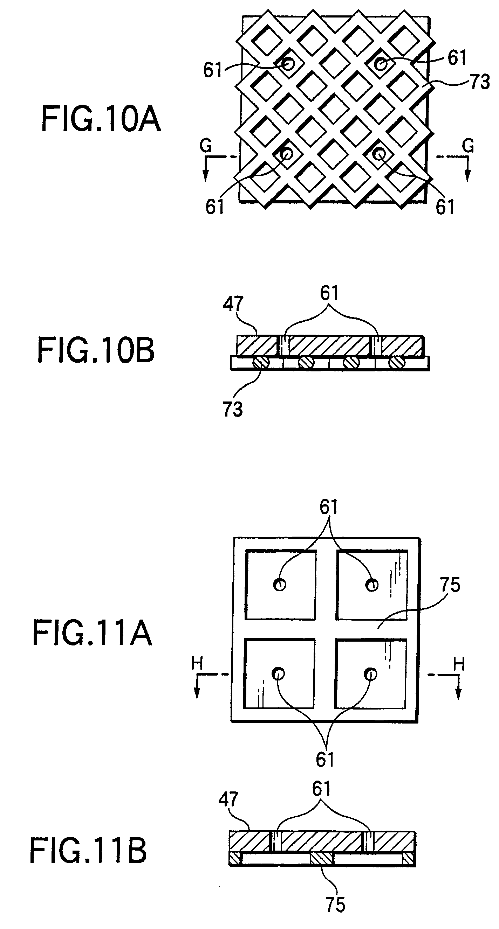

In Figs. 10A and 10B, a lattice member 73 is fixed to the lower surface of the distribution plate 47 so as to form protrusions. Thus, the holes 61 are located to be surrounded by the lattice portions respectively. Fig. 10A is a bottom view showing a part of the distribution plate 47, and Fig. 10B is a sectional view taken on line G-G in Fig. 10A. In this case, the liquid fuel B flowing out from the lower surfaces of the holes 61 is collected in the inner lattice portions, and falls down in the form of drops. Thus, an effect similar to that in the embodiment in Figs. 6A and 6B can be obtained.

In Figs. 11A and 11B, areas of the inner lattice portions of a lattice member 75 forming protrusions are increased so that the inner lattice portions correspond to the holes 61 respectively. Fig. 11A is a bottom view showing a part of the distribution plate 47, and Fig. 11B is a sectional view taken on line H-H in Fig. 11A. Also in this case, the liquid fuel B flowing out from the lower surfaces of the holes 61 is collected in the inner lattice portions, and falls down in the form of drops. Thus, an effect similar to that in the embodiment in Figs. 6A and 6B can be obtained.

In the variation of the first embodiment of Figs. 10A and 10B and the variation of the first embodiment of Figs. 11A and 11B, it will go well if working for forming the holes 61 is given to the distribution plate 47. Thus, the working becomes easy.

In addition, in each of the embodiments of Figs.

8A and 8B, Figs. 9A and 9B, Figs. 10A and 10B and Figs. 11A to 11B, by performing working for forming holes 61 in the distribution plate 47 after the recess portions 67, the grooves 69 or the lattice member 73 or 75 is provided on the distribution plate 47, for example, the holes 61 can be disposed in the inside of the lattice portions of the lattice member 73 easily. It is therefore possible to reduce the manufacturing cost.

Incidentally, the shapes around the holes 61 in the lower surface of the distribution plate 47 are not limited to those in the above-mentioned embodiments. For example, the lower surfaces of the holes 61 may be formed into concavely curved surfaces in place of the chamfers 63 in Figs. 6A and 6B or the spot-faces 65 in Figs. 7A and 7B. Alternatively, the square recess portions 67 in Figs. 8A and 8B may be made circular, or the grooves 69 in Figs. 9A and 9B may be formed so that the square protrusion portions 71 become circular. Further, for example, expanded metal may be fixed to the lower surface of the distribution plate 47 in place of the lattice member 73 or 75 in Figs. 10A and 10B or Figs. 11A and 11B.

Second Embodiment

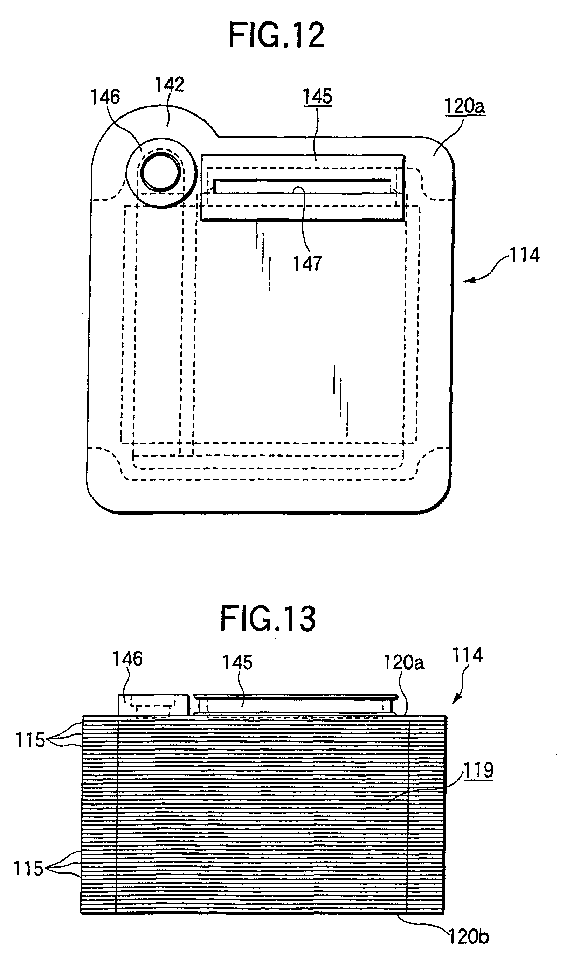

Figs. 12 to 22 show a second embodiment of the present invention. A first heat exchanger 114 with a second heat exchanger, which is a fuel battery heat exchanger according to the present invention, has a core portion 119. In the core portion 119, a plurality of heat transfer pipe elements 115, 115, ... are put on top of one another so that a pair of first and second metal plates 116 and 117 and outer fins 118 are provided between adjacent ones 115 and 115 of the heat transfer pipe elements 115, 115, ... Each of the heat transfer pipe elements 115, 115, ... includes a flat channel in the inner side thereof. The flat channel is to flow mixed fluid of methanol and water, which is a fluid to be heated.

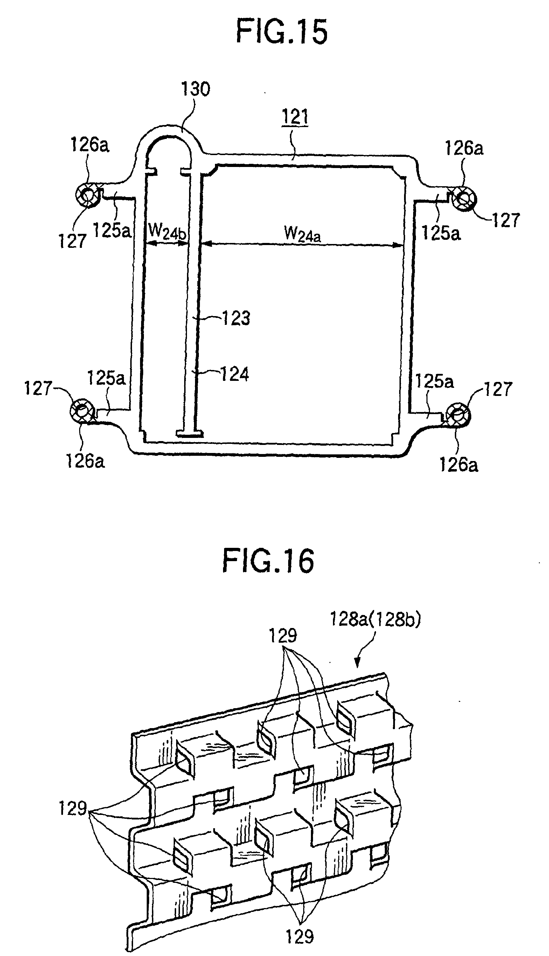

Each heat transfer pipe element 115 of the core portion 119 is constituted by a third metal plate 121 formed like a frame as a whole, and a pair of partition plates 122 and 122 holding the third metal plate 121 from the opposite sides of the third metal plate 121. In addition, in a part of the inner circumferential surface of each third metal plate 121, a partition portion 123 which is long in the longitudinal direction (in the up/down direction of Fig. 15) is formed to project in a portion close to one transverse end of a side surface (a portion close to the left end in Fig. 15) facing one longitudinal side (the lower side in Fig. 15). Then, inside each third metal plate 121, a U-shaped channel 124 is formed to be folded back to the opposite side by 180 degrees in the other longitudinal end portion (the lower end portion in Fig. 15). The ratio $W_{24b}/W_{24a}$ of a transverse length $W_{24b}$ of a half portion on one end side of the U-shaped channel 124 (the left end side in Fig. 15) to a transverse length $W_{24a}$ of a half portion on the other end side (the right end side in Fig. 15) ranges approximately from 0.1 to 0.2 ($W_{24b}/W_{24a} \fallingdotseq 0.1 \sim 0.2$). Further, in this embodiment, protrusion portions 125a and 125a are formed at two positions in each of the opposite side surfaces in the transverse direction (in the left/right direction of Fig. 15) of each third metal plate 121 so as to project from the vicinities of the longitudinally opposite end portions of each of the transversely opposite side surfaces of the third metal plate 121. In addition, in this embodiment, substantially circular assembling support portions 126a, 126a, ... are formed in the forward end portions (the crosshatched portions in Fig. 15) of the respective protrusion portions 125a, 125a, ... in the state where the respective constituent members of the first heat exchanger 114 provided with the second heat exchanger portion have not been yet jointed to each other by brazing. Then, through holes 127, 127, ... through which pipe-like rods described later can be inserted freely are formed in the respective assembling support portions 126a, 126a, ... The continuous portions between the respective assembling support portions 126a, 126a, ... and the respective protrusion portions 125a, 125a, ... are cut off after the respective constituent members of the first heat exchanger 114 provided with the second heat exchanger portion have been joined to each other by brazing. Thus, the respective assembling support portions 126a, 126a, ... are removed from the body portion of each third metal plate 121.

In addition, inside each third metal plate 121, two inner fins 128a and 128b different in transverse length from each other are provided in spaces which exist on the opposite sides of the partition portion 123, respectively. Each of the inner fins 128a and 128b is formed in such a manner that a metal plate such as a stainless steel plate is bent while partially nicked to be thereby formed into a shape as illustrated in Fig. 16. The shape as illustrated in Fig. 16 will be described briefly. Each of the inner fins 128a and 128b has a corrugated shape in the circulating direction of the mixed fluid (the up/down direction of Fig. 16). In addition, portions shifted from each other by 1/4 pitch in terms of the phase of the corrugated shape are arranged alternately in the transverse direction (left/right direction of Fig. 16), so that a large number of apertures 129, 129, ... are formed in a border portion between portions transversely adjacent to each other. Thus, the mixed fluid flows while meandering through the respective apertures 129, 129, ...

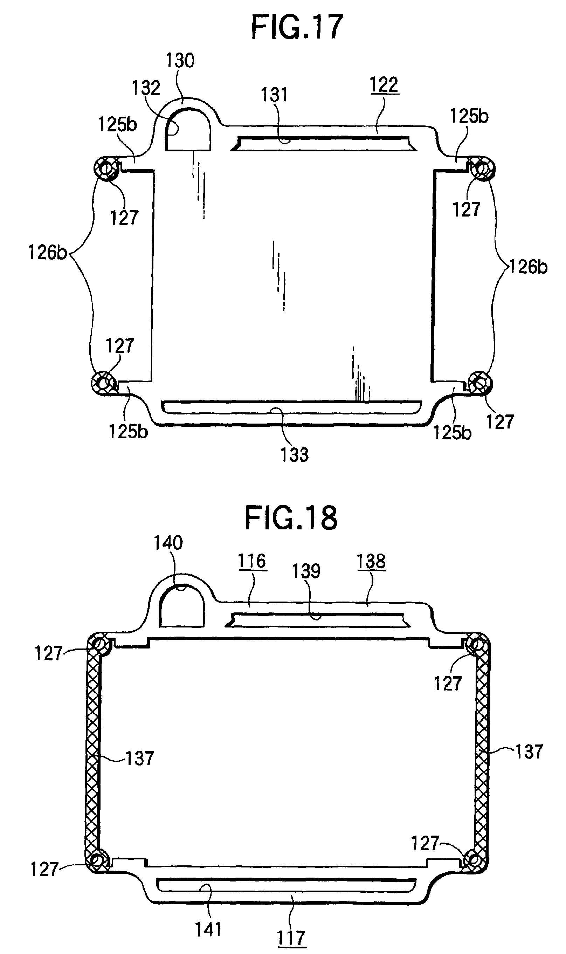

In addition, each partition plate 122 described above has a rectangular shape as a whole, as illustrated in Fig. 17. A semicircular protrusion portion 130 is formed in a transverse end portion (the left end portion in Fig. 17) so as to project beyond a longitudinal end surface (the upper end surface in Fig. 17). A first through hole 131 which is transversely long is formed in the other transverse portion (the right half portion in Fig. 17) of one longitudinal end portion of each partition plate 122. On the other hand, in the portion close to one transverse end portion (the left half portion in Fig. 17) likewise, a second through hole 132 which is substantially semicircular is formed in a position to substantially match the semicircular protrusion portion 130. In addition, a third through hole 133 which is transversely long is formed in the other longitudinal end portion (the lower end portion in Fig. 17) of each partition plate 122. Further, protrusion portions 125b and 125b similar to the protrusion portions 125a and 125a in each third metal plate 121 are formed at two positions in each of the opposite side surfaces in the transverse direction (in the left/right direction of Fig. 17) of each partition plate 122. In addition, assembling support portions 126b, 126b, ... and through holes 127, 127, ... are formed in the forward end portions (the crosshatched portions in Fig. 17) of the respective protrusion portions 125b, 125b, ... in the same manner as that in each third metal plate 121.

Then, a pair of partition plates 122 and 122 and the third metal plate 121 are combined to formone heat transfer pipe element 115. In this state, inside the heat transfer pipe element 115 (between the pair of partition plates 122 and 122), an upstream is provided correspondingly to a portion of the U-shaped channel 124 close to the one end transversely long. Likewise, a downstream heated channel 135 is provided correspondingly to a portion of the U-shaped channel 124 close to the other end transversely short. Likewise, an intermediate heated channel 136 is provided correspondingly to an intermediate portion of the U-shape channel 124 . Thus, the intermediate heated channel 136 connects end portions of the upstream and downstream heated channels 134 and 135 with each other.

In addition, a pair of first and second metal plates 116 and 117 are held in opposite end portions by adjacent ones 115 and 115 of the heat transfer pipe elements 115, 115, ... configured thus. The pair of first and second metal plates 116 and 117 are shaped similarly to the longitudinally opposite end portions of each partition plate 122, respectively. Incidentally, Fig. 18 shows a structure in which connection portions 137 and 137 are provided in the crosshatched portions between the opposite end surfaces in the transverse direction (the left/right direction of Fig. 18) of the pair of first and second metal plates 116 and 117 so that the pair of first and second metal plates 116 and 117 are connected to each other through the connection portions 137 and 137. That is, in the state where the respective constituent members of the first heat exchanger 114 provided with the second heat exchanger have not yet been joined to each other by brazing, the pair of first and second metal plates 116 and 117 are connected to each other through the connection portions 137 and 137 so as to form one combination element 138. Then, continuous portions between the respective connection portions 137 and 137 provided in each combination element 138, and the end portions of the pair of first and second metal plates 116 and 117 are cut off after the respective constituent members of the first heat exchanger 114 provided with the second heat exchanger have been joined to each other by brazing. Thus, the pair of first and second metal plates 116 and 117 are separated from each other. In addition, through holes 127 and 127 through which not-shown pipe-like rods can be inserted freely are formed in the opposite end portions of each of the connection portions 137 and 137.

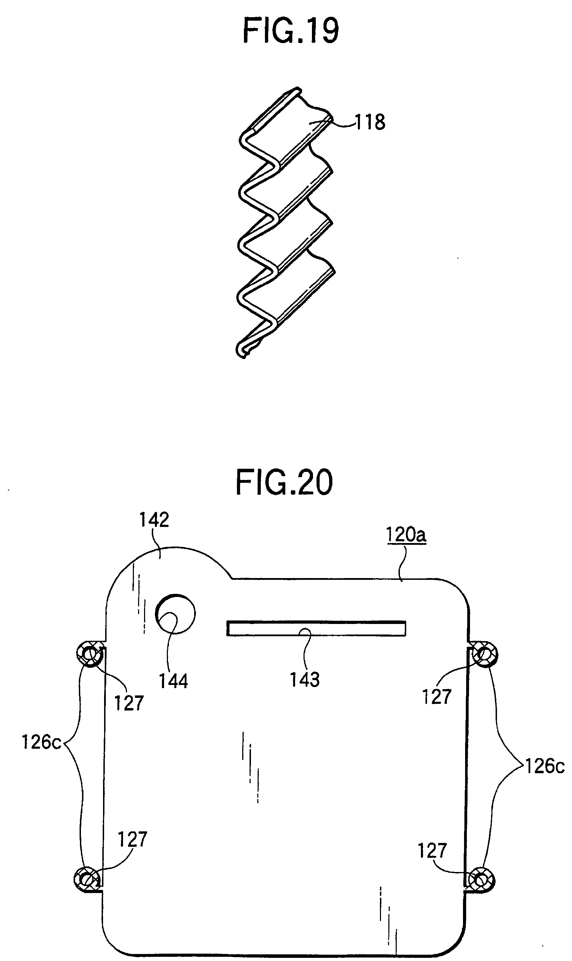

In addition, a fourth through hole 139 is formed in a transversely one-end-side half portion (the right half portion in Fig. 18) of one longitudinal end portion (the upper end portion in Fig. 18) of each combination element 138 correspondingly to the first metal plate 116 so that the fourth through hole 139 matches the first through hole 131 provided in each partition plate 122 described above. On the other hand, a fifth through hole 140 is formed in the other transverse end portion (the left end half portion in Fig. 18) of the longitudinal end portion of each combination element 138 correspondingly to the first metal plate 116 so that the fifth through hole 140 matches the second through hole 132 provided in each partition plate 122 described above. In addition, a sixth through hole 141 is formed in the other longitudinal end portion (the lower end portion in Fig. 18) of each combination element 138 correspondingly to the second metal plate 117 so that the sixth through hole 141 matches the third through hole 133 provided in each partition plate 122 described above. Then, the outer fins 118 are disposed inside each combination element 138 between portions corresponding to the pair of first and second metal plates 116 and 117. The outer fins 118 are formed by a corrugated metal plate such as a stainless steel plate as illustrated in Fig. 19.

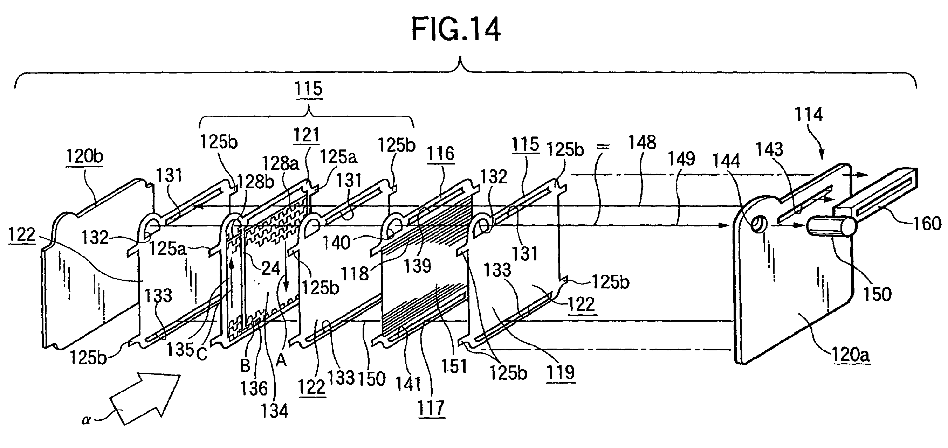

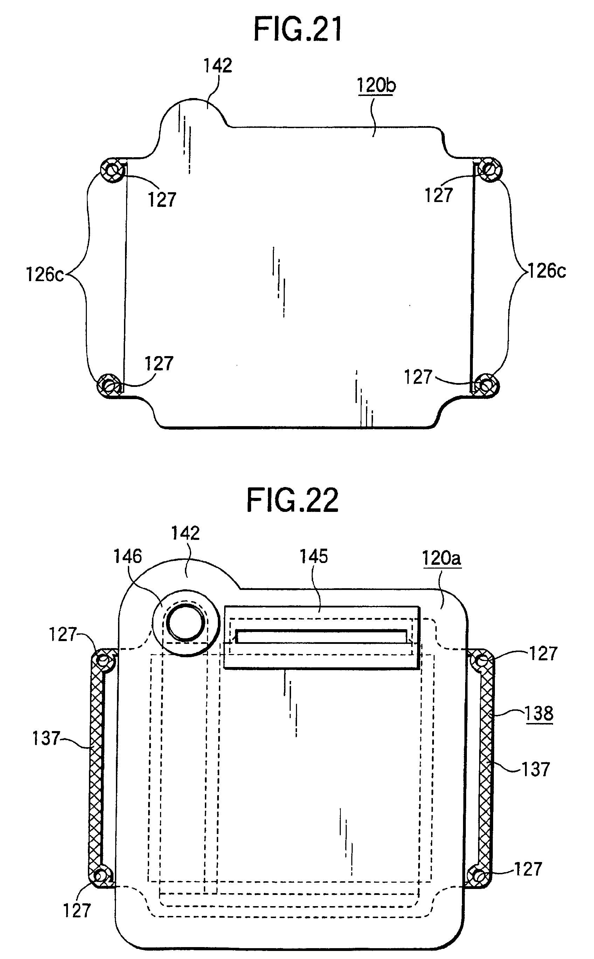

Then, the respective heat transfer pipe elements 115, 115, ..., the respective of first and second metal plates 116 and 117, and the respective inner and outer fins 128a, 128b and 118 which are configured as described above are put on top of one another so as to form the core portion 119. In addition, apair of side plates 120a and 120b are superimposed on the opposite ends of the core portion 119. In this case, the respective first metal plates 116 are disposed on one side in the longitudinal direction of the respective heat transfer pipe elements 115, 115 ... while the respective second metal plates 117 are disposed on the other side. In addition, each of the side plates 120a and 120b is formed into a rectangular shape as a whole, as illustrated in Figs. 20 and 21. In addition; a semicircular protrusion portion 142 is formed to project in one transverse end portion (the left end portion in Figs. 20 and 21) of one longitudinal end surface (the upper end surface in Fig. 20 and 21) of each of the side plates 120a and 120b. In addition, of the pair of side plates 120a and 120b, in one longitudinal end portion of the side plate 120a illustrated in Fig. 20, a fluid inflowport 143 and a fluid outflow port 144 are formed in positions to match the first and second through holes 131 and 132 provided in each partition plate 122 (or the fourth and fifth through holes 139 and 140 provided in each first metal plate 116), respectively. Fluid to be heated is introduced from a fluid inlet unit 160 fixed to the fluid inflow port 143, and output from a fluid outlet unit 150 fixed to the fluid outflow port 144. As shown in Fig. 14, the fluid is introduced in a direction perpendicular to the fluid flowing direction A and the flowing direction $\alpha$ of the heating gas. On the other hand, of the pair of side plates 120a and 120b, the side plate 120b illustrated in Fig. 21 is not provided with such a fluid inflow port and such a fluid outflow port. In addition, substantially circular assembling support portions 126c and 126c are formed to project at two positions in each of the transversely (left/right direction of Figs. 20 and 21) opposite end surfaces of the pair of side plates 120a and 120b, which are crosshatched in Figs. 20 and 21. In addition, through holes 127, 127, ... through which not-shown pipe-like rods can be inserted freely are formed in parts of the respective assembling support portions 126c, 126c, ...

Each of the combination elements 138, the third metal plates 121, the partition plates 122 and the side plates 120a and 120b is formed of a core material which is made of a stainless steel plate or the like and the opposite surfaces of which have been plated with a brazing material layer containing a large amount of Ni, or a stainless steel plate or the like the opposite surfaces of which have been coated with a paste-like brazing material containing a large amount of Ni. Alternatively, the respective members 138, 121, 122, 120a and 120b may be simply made of metal plates such as stainless steel plates, and brazing foil may be put among the respective members 138, 121, 122, 120a and 120b when the respective members 138, 121, 122, 120a and 120b are assembled. When the first heat exchanger 114 provided with the second heat exchanger which is a fuel battery heat exchanger according to the present invention is to be produced, the respective combination elements 138, the respective third metal plates 121, the respective partition plates 122, the pair of side plates 120a and 120b, and the inner and outer fins 128a, 128b and 118 are assembled in the state where the pair of side plates 120a and 120b are disposed on the opposite ends of the first heat exchanger 114 provided with the second heat exchanger.

In addition, in the state where the respective members 138, 121, 122, 120a, 120b, 128a, 128b, and 118 have been assembled, the transversely opposite end portions of each combination element 138, the respective protrusion portions 125a and 125b provided in each third metal plate 121 and each partition plate 122, and the transversely opposite end portions of one-side surfaces of the pair of side plates 120a and 120b are put on top of one another. In addition, in this state, the through holes 127, 127, ... provided in the connection portions 137 and 137 of the respective combination elements 138, and the through holes 127, 127, ... provided in the assembling support portions 126a to 126c of the respective third metal plates 121, the respective partition plates 122 and the side plates 120a and 120b are matched with one another. Then, four pipe-like rods are inserted through the respective through holes 127, 127, ..., so as to carry out temporary assembly. Then, in the state of such temporary assembly, the respective members 138, 121, 122, 120a, 120b, 128a, 128b and 118 are constrained by jigs and heated in a heating furnace. Thus, the respective members 138, 121, 122, 120a, 120b, 128a, 128b and 118 are brazed and joined to one another by the above-mentioned brazing material or the like so as to be brought into the state shown in Fig. 14.

After the respective members have been brazed and joined thus, the respective connection portions 137, 137, ... provided in the respective combination elements 138, and the respective assembling support portions 126a to 126c provided in the respective third metal plates 121, the respective partition plates 122 and the side plates 120a and 120b are removed from the body portions of the respective members, and the pair of first and second metal plates 116 and 117 are separated from each other. Then, a portion between the pair of first and second metal plates 116 and 117 where the outer fins 118 exist between adjacent ones 115 and 115 of the heat transfer pipe elements 115, 115, ... is formed as a heating channel 151 in which heating gas as heating fluid flows.

In addition, at the same time that the respective constituent members are brazed and joined thus, end surfaces of a connection block 145 and a fluid output pipe 146 (Figs. 12, 13 and 22) are brazed and joined to one longitudinal end portion (the upper end portion in Figs. 12, 14 and 20) of the outer surface of the side plate 120a of the pair of side plates 120a and 120b. Of them, the connection block 145 has a substantially H-shape in section so as to form a rectangular through hole 147 in an intermediate portion of the connection block 145. The through hole 147 penetrates the opposite side surfaces of the connection block 145. Then, the inside of the through hole 147 is made to communicate with the inside of the fluid inflow port 143 provided in the side plate 120a. On the other hand, the inside of the fluid outflow pipe 146 is made to communicate with the inside of the fluid outflow port 144 provided in the side plate 120a.

In addition, the inner spaces of the fourth holes 139 provided in the respective first metal plates 116, the upstream end portions of the respective upstream heated channels 134, and the inner spaces of the first through holes 131 provided in the respective partition plates 122, which are opposite to one another in the state where the respective constituent members have been assembled as described above, are made to communicate with one another so as to form an inlet tank portion 148. Then, in this embodiment, a not-shown fluid supply member for feeding the mixed fluid into the inside of the core portion 119 is inserted into the inside of the inlet tank portion 148, the connection block 145 and the fluid inflow port 143 which is provided in the side plate 120a. For example, this fluid supply member is constituted by a pair of metal plates put on top of each other and joined to each other, so that distribution channels for distributing the mixed fluid while making the mixed fluid flow therein are formed inside the fluid supply member. In addition, in the lower portion of the fluid supply member, through holes for making the inside of the fluid supply member communicate with the outside are formed in a plurality of places matching the distribution channels.

Then, after the respective constituent members of the first heat exchanger 114 provided with the second heat exchanger excluding the fluid supply member have been brazed and joined to one another, a part of the fluid supply member is inserted into the inside of the inlet tank portion 148, the fluid inflow port 143 and the connection block 145. At the same time, the outer circumferential surface of the rest portion of the fluid supply member which projects beyond the connection block 145 is liquid-tightly joined to the outer end surface of the connection block 145, and so on, by welding or the like. In this state, the lower end portions of the plurality of through holes provided in the fluid supply member are opened to the upstream portions of the upstream heated channels 134 provided in the respective heat transfer pipe elements 115. In addition, an end portion of pipe arrangement for feeding the mixed fluid into the fluid supply member is detachably connected to a part of the rest portion of the fluid supply member which projects beyond the connection block 145.

On the other hand, the inner spaces of the fifth holes 40 provided in the respective first metal plates 116, the downstream end portions of the respective downstream heated channels 135, and the inner spaces of the second through holes 132 provided in the respective partition plates 122, which are opposite to one another in the state where the respective constituent members have been assembled, are made to communicate with one another so as to form an outlet tank portion 149. Then, the upstream end of the fluid outflow pipe 146 is made to communicate with this outlet tank portion 149 (the right end portion in Fig. 14) in the one longitudinal end portion through the fluid outflow port 144 provided in the side plate 120a. In addition, an end portion of not-shown pipe arrangement for making the mixed fluid flow out from the inside of the core portion 119 is detachably connected to an end portion of the fluid outflow pipe 146. On the other hand, the inner spaces of the sixth holes 141 provided in the respective second metal plates 117, the respective intermediate heated channels 136, and the inner spaces of the third through holes 133 provided in the respective partition plates 122, which are opposite to one another in the state where the respective constituent members have been assembled, are made to communicate with one another so as to form an intermediate tank portion 150.

Further, in this embodiment, of the upstream and downstream heated channels 134 and 135, the downstream heated channels 135 in which the mixed fluid on the downstream side flows are provided on the upstream side (front side in Fig. 14) of the core portion 119 in terms of the circulating direction of the heating gas (in the direction of the arrow $\alpha$ in Fig. 14).

When the fuel battery heat exchanger configured thus according to the present invention is used, mixed liquid fluid of methanol and water is fed into the inside of the fluid supply member through not-shown pipe arrangement. After the mixed fluid fed into the inside of the fluid supply member flows through the distribution channels, the mixed fluid is fed into the inside of the upstream heated channels 134, which are provided in the respective heat transfer pipe elements 115, 115, ..., through a plurality of through holes provided in the lower portion of the fluid supply member. Then, the mixed fluid flows into the intermediate tank portion 150 through the respective upstream heated channels 134 in the direction shown by the arrow A in Fig. 14, while heat exchange is carried out between the mixed fluid and the high-temperature heating gas flowing in the direction of the arrow $\alpha$ in Fig. 14 through the respective heating channels 151 provided between the pair of first and second metal plates 116 and 117. In such a manner, heat exchange is carried out between the mixed fluid and the high-temperature gas while the mixed fluid is flowing through the respective upstream heated channels 134. Thus, the mixed fluid is heated to about 100°C, and evaporated into gas.

Then, the mixed gaseous fluid reaching the intermediate tank portion 150 subsequently flows toward the respective downstream heated channels 135 through the intermediate tank portion 150 in the direction shown by the arrow B in Fig. 14. Then, the mixed fluid flows into the outlet tank portion 149 through the downstreamheated channels 135 in the direction shown by the arrow C in Fig. 14, while heat exchange is carried out. While the mixed fluid is flowing through the respective downstream heated channels 135 in such a manner, the mixed fluid is superheated by the heat exchange so that the temperature of the mixed fluid reaches a predetermined temperature of about 160°C. Then, after the mixed fluid supplied to the outlet tank portion 149 flows through the outlet tank portion 149 in the direction shown by the arrow D in Fig. 14, the mixed fluid flows out to the outside through the fluid outflow pipe 146 (Figs. 12, 13 and 22). The mixed fluid flowing out to the outside thus is supplied to a not-shown reformer so as to be used for undergoing a reaction to generate hydrogen gas.

In the fuel battery heat exchanger according to the present invention, heat exchange is carried out between the mixed fluid and the heating gas by the above-mentioned configuration and in the above-mentioned manner. Thus, the mixed liquid fluid is evaporated, and further superheated to a predetermined temperature. In this case, the intermediate heated channels 136 can be formed by parts of a plurality of heat transfer pipe elements 115, 115, ... The end portions of the upstream and downstream heated channels 134 and 135 for flowing the mixed fluid in directions reverse to each other are connected with each other through the intermediate heated channels 136. Thus, according to the present invention, a first heat exchanger and a second heat exchanger provided separately from each other do not have to be joined integrally, while the number of parts of the fuel battery as a whole can be reduced and the circuit can be simplified. Further, even if parts of the constituent members of the first heat exchanger 114 provided with the second heat exchanger are joined to one another by brazing as described in this embodiment, it is possible to surely prevent secondary melting from being produced in brazed portions due to the heat of welding. Thus, the yield can be improved. Therefore, according to the present invention, it is possible to provide a compact and inexpensive structure in which mixed liquid fluid is evaporated by the heating gas, and further superheated to a predetermined temperature.

Further, in this embodiment, of the up stream and downstream heated channels 134 and 135, the downstream heated channels 135 in which the mixed fluid on the downstream side flows are provided on the upstream side of the core portion 119 in terms of the circulating direction α of the heating gas . Thus, heat exchange is carried out between the comparatively high-temperature heating gas and the comparatively high-temperature mixed fluid while the mixed fluid is flowing through the downstream heated channels 135. As a result, heat exchange can be carried out between the heating gas the temperature of which has become relatively low, and the comparatively low-temperature mixed fluid. Thus, the evaporated mixed fluid can be superheated to a predetermined temperature more easily in the lower heated channels 135. Further, in comparison with the case where heating gas is made to flow in the direction reverse to the direction of the arrow·α in Fig. 14, the difference in temperature between the opposite sides of parts of constituent members (partition plates 122) which are provided for partitioning the upstream and downstream heated channels 134 and 135 and the respective heating channels 151 can be reduced. Accordingly, thermal stress generated in such constituent members is reduced so that the durability of the first heat exchanger 114 provided with the second heat exchanger can be ensured satisfactorily.

Further, according to the fuel battery heat exchanger in this embodiment, it is possible to improve the degree of freedom in a connection position between an end portion of pipe arrangement for feeding the mixed fluid to the core portion 119 and an end portion of pipe arrangement for making the mixed fluid flow out from the core portion 119. Thus, the space in which the first heat exchanger 114 provided with the second heat exchanger is disposed can be utilized effectively. Further, in this embodiment, in the state where the respective constituent members of the first heat exchanger 114 provided with the second heat exchanger have not yet been joined to one another by brazing, the assembling support portions 126a to 126c and the connection portions 137, 137, ... are provided in parts of the constituent members. In addition, pipe-like rods are inserted into the through holes 127, 127, ... provided in the respective portions 126a to 126c and 137, 137 ... . Thus, the respective constituent members are assembled temporarily. As a result, the working of temporary assembling of the respective constituent members becomes easy. In addition, before the respective constituent members are joined to one another by brazing, the pair of first and second metal plates 116 and 117 are connected with each other through the connection portions 137 and 137 so as to form a combination element 138. Thus, it becomes easy to handle the pair of first and second metal plates 116 and 117. Therefore, according to this embodiment, the working of assembling the first heat exchanger 114 provided with the second heat exchanger can be made easy.

The fuel battery heat exchanger according to the present invention is configured and operates as described above. Accordingly, it is possible to provide a compact and inexpensive structure in which fluid to be heated such as mixed liquid of methanol and water is evaporated, and further superheated to a predetermined temperature. This structure is therefore possible to contribute to high performance and low cost in various machinery and equipment such as an electric vehicle in which a fuel battery has been incorporated.

Third Embodiment

Fig. 28 shows a fuel battery heat exchanger unit 200 according to a third embodiment of the present invention.

The fuel battery heat exchanger unit 200 comprises a heat exchanger 205, a front duct 230 attached to an end of the heat exchanger 205, and a rear duct 240 attached to an opposite end of the heat exchanger 205.

A heating fluid flows into the fuel battery heat exchanger unit 200 from the front duct 230 toward the rear duct 240 through the heat exchanger 205 in straight.

The heat exchanger 205 includes a housing 210 having an opening, and a side plate 220 fixed to the opening of the housing 210 to securely cover and seal the opening of the housing 210.

The side plate 220 has an inlet 221 from which a mixed fluid of methanol and water that constitute a fluid to be heated is introduced in the heat exchanger 205. A corner 222 changes the flowing direction of the mixed fluid to introduce the mixed fluid into the heat exchanger 205 in a direction perpendicular to the surface of the side plate 220. That is, different from the fuel battery heat exchanger as shown in Figs. 1 and 5, the mixed fluid is introduced in a direction perpendicular to the flowing direction of the heating fluid. The mixed fluid may be introduced into the heat exchanger 205 directly in the direction perpendicular to the flowing direction of the heating fluid, without the corner 222. The introduction in the direction perpendicular to the flowing direction of the heating fluid greatly increases the design freedom of the fuel battery heat exchanger unit or arrangement with the other components. In the second embodiment, the inlet may be disposed to introduce the fluid to be heated in the direction perpendicular to the flowing direction of the heating fluid.

The side plate 220 also has an outlet 225 next to the inlet 221. The mixed fluid is heated in the heat exchanger 205 and discharged from the outlet 225.

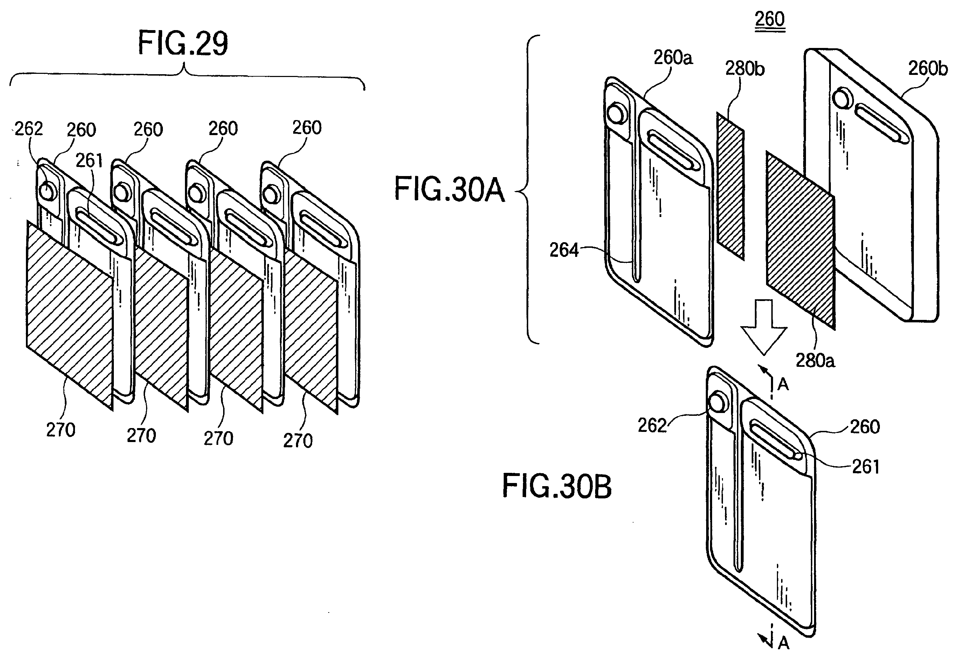

Fig. 29 shows a plurality of tube sheets 260 and a plurality of outer fins 270, both accommodated in the housing 210 of the core potion 205. Each of the plurality of tube sheets 260 has an inlet-side tank forming hole 261 and an outlet-side tank forming hole 262, both defined in the vicinity of one side of the tube sheet. The inlet-side tank forming hole 261 elongates along with the one side of the tube sheet 260.

The plurality of outer fins 270 are arranged in parallel with the tube sheets 260, each of which is sandwiched between and fixed to the adjacent tube sheets 260 by blazing. The adjacent tube sheets 260 are also fixed to each other by blazing.

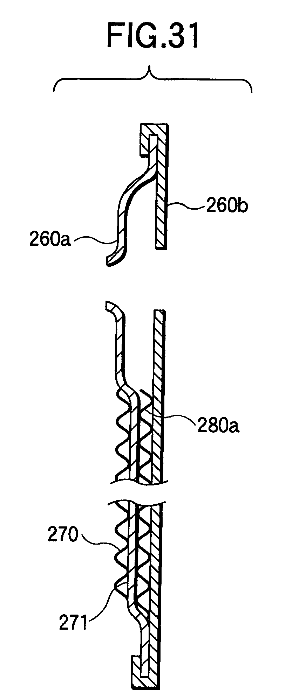

Figs. 30A and 30B are views showing each of the sheet tubes 260. Fig. 31 shows a sectional view as seen from the A-A line of Fig. 30B. Each of the sheet tubes 260 includes a first tube sheet 260a, a second tube sheet 260b, which are laminated with each other with the peripheral portion of the second sheet 260b caulked and fixed to the first tube sheet 260a. The first tube sheet 260a has a dividing recess 264 projecting toward the second tube sheet 260b. The first tube sheet 260a and the second tube sheet 260b form an inner space therebetween, and the dividing recess 264 divides the inner space into a first heating passage and a second heating passage, both of which are communicated with each other at the lower end of the inner space. The first heating passage accommodates a first inner fin 280a, and the second heating passage accommodates a second inner fin 280b.

The inlet-side tank forming hole 261 and the outlet-side tank forming hole 262 of each of the tube sheets 260 communicate with the inner space where the inner fins 280a and 280b are disposed. The mixed fluid introduced from the inlet 221 flows into the first heating passage through the inlet-side tank forming hole 261. Then, the mixed fluid flows to the second heating passage, and finally discharged from the outlet 225 through the outlet-side tank forming hole 262.

The outer fin 270 is disposed on an outer surface 271 of the first sheet tube 260a. Accordingly, they are arranged in the described order of the outer fin 270, the first sheet tube 260a, the inner fin 280a, and the second sheet tube 260b. The inner space where the inner fin 280a is accommodated is sealed from the outer space where the outer fin 270 is disposed to prevent the fluids flowing in the inner and outer space from leaking to each other.

The plurality of tube sheets 260 and outer fins are alternately connected by blazing to form a stacked core. The stacked core is fixed by blazing to the side plate 220 and another side plate not shown, at both ends. The side plate contributes to preventing the stacked core from deforming.

The plurality of tube sheets 260 and outer fins 270 are disposed in the housing 210 in parallel to the surface of the side plate 220. That is, both elements 260 and 270 are disposed in parallel to the flowing direction of the heating fluid. Accordingly, the first and second heating passages are defined perpendicular to the flowing direction of the heating fluid. Therefore, all of the flowing direction of the mixed fluid, the flowing direction of the heating fluid, and the introducing direction of the mixed fluid into the heat exchanger are different from each other.

The heating fluid flows through the outer fins 270 each between the adjacent tube sheets 260, and transfers heat to the outer fins 270. The heat transferred to the outer fins 270 heats the tube sheets 260, and then transferred to the inner fins 280a and 280b. The heated inner fins 280a and 280b heat the mixed fluid flowing in the first heating passage and second heating passage.

In addition, the tube sheets 260 and the outer fins 270 are disposed in the housing 210 so that the inlet-side tank forming hole 261 and the outlet-side tank forming hole 262 of each tube sheet 260 are positioned correspondingly with respect to the inlet 221 and the outlet 225 of the side plate 220, respectively.

The plurality of tube sheets 260 stacked with each other stacks and connects the outlet-side tank forming holes 262 and the inlet-side tank forming holes 261 respectively. The outlet-side tank forming holes 262 stacked and connected defines an outlet tank portion, and the inlet side tank forming holes 261 stacked and connected defines an inlet tank portion.

In total, the fuel battery heat exchanger unit 200 according to the third embodiment has almost the same structure as that of the second embodiment, except for the positions of the inlet 221 and outlet 225.

As shown in Fig. 5, a fuel supply unit including a distribution plate having a plurality of holes for passing the mixed fluid may be disposed in the inlet tank portion. In such a case, the distribution plate may have the structure shown in Figs. 6A to 118. The fuel supply unit including the distribution plate functions as mentioned in the first embodiment. The fuel supply unit can be inserted into the inlet tank portion before the inlet members such as the inlet 221 and corner 22 are assembled to the side plate 220.

As well as the second embodiment, the inner fins 280a and 280b may be formed as shown in Fig. 16 and the outer fins 270 may be formed as shown in Fig. 19.

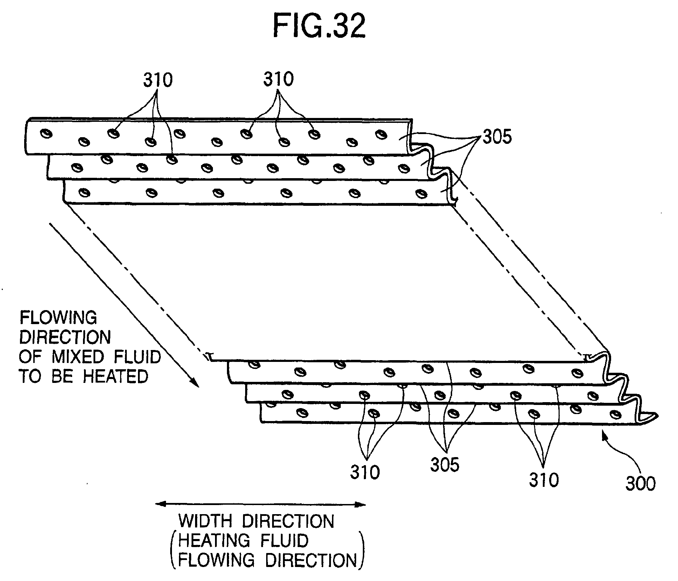

Fig. 32 shows an inner fin 300 which may be applied as the outer fin 280a in Fig. 19. The inner fin 300 is disposed in the housing in such a manner that the mixed fluid to be heated falling from the above inlet tank space faces to each fin 305. The fins 305 prevent the mixed fluid from flowing straightly. Each fin 305 has a plurality of small holes 310 through which a small amount of the mixed fluid flows. Accordingly, the mixed fluid is likely to expand to the width direction of the inner fin 300, rather than to straightly fall down to the bottom. Suppose that the mixed fluid usually flows along with a pass connecting between the inner tank space and the bottom of the tube sheet 260, or the bottom of the tube sheet 260 and the outer tank space. However, each fin 305 disturbs the mixed fluid to flow straight. Namely, the inner fin 300 increases the flowing resistance of the mixed fluid in the usual flowing direction of the mixed fluid to be heated, which is larger than the flowing resistance of the mixed fluid that flows in the width direction. Such an inner fin 300 improves to uniformly expand the mixed fluid to be heated in the whole first and second heating passages. The inner fin 300 can also be applied in the second embodiment.

The mixed fluid introduced into the inner fin 280 is usually in the form of liquid. Such an inner fin 300 used as the inner fin 280a, which disturbs the flow of the liquid effectively changes the liquid into gas.

In the third embodiment, as shown in Fig. 29, the lower portion of the first and second passages of one of the tube sheet is not connected to that of the adjacent tube sheets. However, these portions may be communicated with each other through communication passages.

**Claims**

1. A heat exchanger comprising:

  a heating medium channel for passing a high-temperature heating medium;
  a fuel channel provided adjacent to the heating medium channel and separated from the heating medium channels through a partition wall, the fuel channels being supplied with liquid fuel from above the heating medium channels to vaporize the liquid fuel by heat exchange with the high-temperature heating medium; and
  a fuel supply plate provided above the heat medium channels, the fuel supply plate having a plurality of holes for passing the liquid fuel,

  wherein a circumferential edge of a fuel-outflow-side opening portion of each of the plurality of holes is chamfered.

2. A heat exchanger comprising:

  a heating medium channel for passing a high-temperature heating medium;
  a fuel channel provided adjacent to the heating medium channel and separated from the heating medium channel through a partition wall, the fuel channels being supplied with liquid fuel from above the heating medium channel to vaporize the liquid fuel by heat exchange with the high-temperature heating medium; and
  a fuel supply plate provided above the heat medium channels, the fuel supply plate having a plurality of holes for passing the liquid fuel,

  wherein a spot-face is formed in a circumferential edge of a fuel-outflow-side opening portion of each of the plurality of holes.

3. A heat exchanger comprising:

  a heating medium channels for passing a high-temperature heating medium;
  a fuel channel provided adjacent to the heating medium channel and separated from the heating medium channels through a partition wall respectively, the fuel channel being supplied with liquid fuel from above the heating medium channel to vaporize the liquid fuel by heat exchange with the high-temperature heating medium; and
  a fuel supply plate provided above the heat medium channel, the fuel supply plate having a plurality of holes for passing the liquid fuel,

  wherein a protrusion is provided on a fuel outflow side from the plurality of holes of the fuel supply plate to partition the plurality of holes.

4. The heat exchanger according to claim 3, wherein the protrusion is integrated with the fuel supply plate.

5. The heat exchanger according to claim 3, wherein the protrusion is constituted by a lattice member provided separately from the fuel supply plate.

6. A heat exchanger comprising:

  a heating medium channel for passing a high-temperature heating medium;
  a fuel channel provided adjacent to the heating medium channel and separated from the heating medium channels through a partition wall, the fuel channels being supplied with liquid fuel from above the heating medium channel to vaporize the liquid fuel by heat exchange with the high-temperature heating medium; and
  a fuel supply plate provided above the heat medium channel, the fuel supply plate having a plurality of holes for passing the liquid fuel,

wherein a groove is provided on a fuel outflow side from the plurality of holes of the fuel supply plate to partition the plurality of holes.

**7.** The heat exchanger according to claim 1, wherein the liquid fuel is a mixed fuel of methanol and water for producing hydrogen required for a fuel battery, and the mixed fuel vaporized is supplied to a reforming reactor for reforming methanol to produce hydrogen.

**8.** The heat exchanger according to claim 2, wherein the liquid fuel is a mixed fuel of methanol and water for producing hydrogen required for a fuel battery, and the mixed fuel vaporized is supplied to a reforming reactor for reforming methanol to produce hydrogen.

**9.** The heat exchanger according to claim 3, wherein the liquid fuel is amixed fuel of methanol and water for producing hydrogen required for a fuel battery, and the mixed fuel vaporized is supplied to a reforming reactor for reforming methanol to produce hydrogen.

**10.** The heat exchanger according to claim 4, wherein the liquid fuel is a mixed fuel of methanol and water for producing hydrogen required for a fuel battery, and the mixed fuel vaporized is supplied to a reforming reactor for reforming methanol to produce hydrogen.

**11.** The heat exchanger according to claim 5, wherein the liquid fuel is a mixed fuel of methanol and water for producing hydrogen required for a fuel battery, and the mixed fuel vaporized is supplied to a reforming reactor for reforming methanol to produce hydrogen.

**12.** The heat exchanger according to claim 6, wherein the liquid fuel is a mixed fuel of methanol and water for producing hydrogen required for a fuel battery, and the mixed fuel vaporized is supplied to a reforming reactor for reforming methanol to produce hydrogen.

**13.** A fuel battery heat exchanger comprising:

a plurality of first tube sheets each defining therein a first channel and a second channel for passing a first fluid to be heated in directions reverse to each other, and an intermediate channel for connecting end portions of the first passage and the second passage with each other; and
a plurality of second tube sheets disposed between the adjacent first tube sheets, the second tube sheets each defining therein a heating channel for passing a second fluid for heating the first fluid,

wherein the second fluid passes through the heating channel in a direction perpendicular to a direction of passing the first fluid through the first channel and the second channel.

**14.** The fuel battery heat exchanger as claimed in claim 13, wherein each of the second tube sheets has an outer fin for forming the heating channel.

**15.** The fuel battery heat exchanger as claimed in claim 14, wherein each of the second tube sheets includes a first metal plate and a second metal plate; and

the outer fin is sandwiched between the first metal plate and the second metal plate.

**16.** The fuel battery heat exchanger according to claim 13, wherein the first fluid flows from the first channel to the second channel through the intermediate channel; and

the second fluid flows in a direction from the second channel toward the first channel.

**17.** The fuel battery heat exchanger as claimed in claim 13, wherein each of the first tube sheets includes:

a third metal plate defining the first channel, the second channel and the intermediate channel; and
a pair of partition plates sandwiching a thirdmetal plate.

**18.** The fuel battery heat exchanger as claimed in claim 17, wherein the third metal plate defines the first channel, the second channel and the intermediate channel to be folded back by 180 degrees in a longitudinal end portion of the third metal plate.

**19.** The fuel battery heat exchanger as claimed in claim 18, wherein each of the partition plates defines a first through hole and a second through hole, and a third through hole;

the first metal plate defines a fourth through hole and a fifth through hole provided to match the first and second through holes of each of the partition plates; and
the second metal plate defines a sixth through hole provided to match the third through hole of each of the partition plates.

**20.** The fuel battery heat exchanger as claimed in claim 19, wherein an inner space of the fourth hole of each of the first metal plate communicates with an inner space of the first through holes to form an inlet tank portion for introducing the first fluid into the first channel of each of the first tube sheet.

21. The fuel battery heat exchanger as claimed in claim 19, wherein an inner space of the fifth through hole of each of the first metal plates communicates with an inner space of the second through hole of each of the partition plates to form an outlet tank portion for collecting the first fluid flowing from the second channel of each of the first tube sheet.

22. The fuel battery heat exchanger as claimed in claim 19, wherein an inner space of the sixth through hole of each of the second metal plate communicates with an inner space of the third through hole of each of the partition plates to form the intermediate tank including the plurality of intermediate channels of the heat transfer element.

23. The fuel battery heat exchanger as claimed in claim 17, wherein each of the first tube sheets includes an inner fin in the third metal plate.

24. The fuel battery heat exchanger as claimed in claim 13, wherein the heating fluid introduced from a side of the second channel.

25. The fuel battery heat exchanger as claimed in claim 13, wherein the first channel is larger in volume than the second channel.

26. The fuel battery heat exchanger as claimed in claim 13, the first and second channels have an inner fin, the inner fin increases the flowing resistance of the first fluid in the flowing direction along with the first and second channels to be larger than the flowing resistance of the mixed fluid that flows in the width direction.

27. A fuel battery heat exchanger comprising:

a plurality of tube sheets each defining therein a first channel for passing a first fluid to be heated;
a plurality of outer fins disposed between the adjacent tube sheets, the outer fins each defining therein a second channel for passing a second fluid for heating the first fluid; and
an inlet for introducing the first fluid into the first tube sheets in a direction perpendicular to the first and the second channel,

wherein the first channel and the second channel are defined perpendicular to each other; and

28. The fuel battery heat exchanger as claimed in claim 27, wherein the tube sheets and outer fins are arranged inparallel with each other.

29. The fuel battery heat exchanger as claimed in claim 28, wherein the tube sheets have a plurality of first openings respectively; and

the plurality of first openings are connected with each other to form an inlet tank space.

30. The fuel battery heat exchanger as claimed in claim 29, further comprising a fuel supply plate having a plurality of holes for passing the first fluid, the fuel supply plate disposed in the inlet tank space.

31. The fuel battery heat exchanger as claimed in claim 27, wherein each of the tube sheets includes an inner fin.

32. The fuel battery heat exchanger as claimed in claim 27, wherein the first channel includes:

a first heat exchanging portion for passing the first fluid in a first direction; and
a second heat exchanging portion for passing the first fluid in a second direction opposite to the first direction.

33. The fuel battery heat exchanger as claimed in claim 32, wherein the tube sheets have a plurality of second openings respectively; and the plurality of second openings are connected with each other to form an outlet tank space.

34. The fuel battery heat exchanger as claimed in claim 33, wherein the outlet tank space is defined above the second heat exchanging portion; and

an outlet for discharging the first fluid is provided to the outlet tank space.

35. The fuel battery heat exchanger as claimed in claim 32, wherein the first exchanging portion and the second exchanging portion is communicated with each other through a intermediate passage.

36. The fuel battery heat exchanger as claimed in claim 32, wherein two laminated plates form each of the tube sheets.

37. The fuel battery heat exchanger as claimed in claim 27, the first channel have an inner fin, the inner fin increases the flowing resistance of the first fluid in the flowing direction along with the first channel to be larger than the flowing resistance of the mixed fluid that flows in the width direction.

# FIG.1

EP 1 193 462 A2

FIG.2

# FIG.3

# FIG.4

# FIG.5

FIG.6A

FIG.6B

FIG.7A

FIG.7B

**FIG.8A**

**FIG.8B**

**FIG.9A**

**FIG.9B**

FIG.10A

61

61

73

G ---- G

61 61

FIG.10B

47

61

73

FIG.11A

61

75

H ---- H

61

FIG.11B

47

61

75

# FIG.12

146  142  145  120a

147  114

# FIG.13

146  145  120a  114

115

115  119

120b

FIG.14

# FIG.15

# FIG.16

# FIG.17

# FIG.18

# FIG.19

118

# FIG.20

142

120a

144

143

127

127

127

127

126c

126c

## FIG.21

## FIG.22

# FIG.23

**FIG.24**

**FIG.25**

A

7

13

11

B

3 5 1 9

**FIG.26**

B

5b

3b

5a

3a

A

3

5

# FIG.27

11

11a

# FIG.28

200

205

210

240

230

222

221

225

220

(HEATING FLUID)

(MIXED FLUID TO BE HEATED)

FIG.30A

FIG.30B

FIG.29

# FIG.31

260b

260a

280a

270

271

# FIG.32

310    310

305

FLOWING
DIRECTION
OF MIXED FLUID
TO BE HEATED

310    305    310    300

WIDTH DIRECTION
( HEATING FLUID )
( FLOWING DIRECTION )